(19) Europäisches Patentamt
European Patent Office
Office européen des brevets

(11) EP 2 546 806 B1

(12) **EUROPEAN PATENT SPECIFICATION**

(45) Date of publication and mention
of the grant of the patent:
**08.05.2019 Bulletin 2019/19**

(51) Int Cl.:
**G06T 17/00** (2006.01)  **G06T 15/20** (2011.01)
**G06T 19/00** (2011.01)

(21) Application number: **12175950.0**

(22) Date of filing: **11.07.2012**

(54) **IMAGE BASED RENDERING FOR AR - ENABLING USER GENERATION OF 3D CONTENT**

BILDBASIERTE DARSTELLUNG FÜR ERWEITERTE REALITÄT - ERMÖGLICHUNG EINER BENUTZERERZEUGUNG VON 3D-INHALT

RENDU À BASE D'IMAGE POUR AR - PERMETTANT À L'UTILISATEUR LA GÉNÉRATION D'UN CONTENU EN 3D

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.07.2011 EP 11173488**

(43) Date of publication of application:
**16.01.2013 Bulletin 2013/03**

(73) Proprietor: **Deutsche Telekom AG**
**53113 Bonn (DE)**

(72) Inventors:
• SWAMINATHAN, Rahul
10435 Berlin (DE)
• AGURTO, Renato
13353 Berlin (DE)
• BURKARD, Simon
10243 Berlin (DE)
• GROTHE, Andreas
10785 Berlin (DE)
• WOLF, Ingo
13187 Berlin (DE)

(74) Representative: **Vossius & Partner**
**Patentanwälte Rechtsanwälte mbB**
**Siebertstrasse 3**
**81675 München (DE)**

(56) References cited:
**EP-A1- 1 507 235     WO-A2-02/069272**

• **ANDREAS HARTL ET AL: "Rapid reconstruction of small objects on mobile phones", COMPUTER VISION AND PATTERN RECOGNITION WORKSHOPS (CVPRW), 2011 IEEE COMPUTER SOCIETY CONFERENCE ON, IEEE, 20 June 2011 (2011-06-20), pages 20-27, XP031926543, DOI: 10.1109/CVPRW.2011.5981789 ISBN: 978-1-4577-0529-8**
• **TOMMASO CHIARELLI ET AL: "A tool to achieve correct and precise measurements for oral implant planning and simulation", MEDICAL MEASUREMENTS AND APPLICATIONS, 2009. MEMEA 2009. IEEE INTERNATIONAL WORKSHOP ON, IEEE, PISCATAWAY, NJ, USA, 29 May 2009 (2009-05-29), pages 246-251, XP031492207, ISBN: 978-1-4244-3598-2**

**Description**

The present invention relates to an augmented reality system and a method of augmented reality, and in particular to an augmented reality system and a method of augmented reality allowing for measurement, 3D modeling and visualization of real world objects.

Increasing power of mobile devices and smartphones has significantly contributed to the progress of augmented reality (AR) applications becoming mobile. While early mobile AR application truly focused on the mobile user, addressing location based applications (see [2]). The current trend is to move traditional AR to the mobile (hand-held) device. These AR applications typically use image features (in the form of 2D Markers, [3]) to visually localize the user to a local coordinate frame rather than GPS based location.

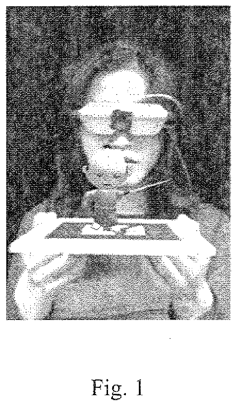

The field of augmented reality is all about imaging a real scene and augmenting it with objects that do not really exist in that scene. As shown in Fig. 1, the camera observes the scene consisting of a person holding up a visual 2D marker. The AR system then automatically places on this marker a 3D graphical model virtually in the scene.

Typically, the marker in AR applications is used to determine the perspective at which the camera views the scene. By perspective we refer to the camera's pose (location and orientation, referred to as "pose") with respect to the marker as well as the camera lens and resolution properties (such as focal length, principle point, etc., together referred to as "camera intrinsics") that determine how it scales and forms an image from that pose. In order to augment this scene with a 3D object, one must also know the position of this object with respect to the marker as well as a 3D model and textures for it.

When working with graphically modelled 3D objects, the 3D model or shape is completely known. Furthermore, the textures used to render or colour the objects are also known. Thus, the only source of error and difficulty arises in determining the pose of the camera to which to render the graphical object. However, this is pretty much solved using the 2D marker and or other sources. Thus, in principle, rendering 3D graphical objects virtually in a real scene (AR with graphical objects) is relatively straightforward. The problem arises when dealing with the need to virtually place real 3D objects in an AR application.

While many such AR applications address themes in entertainment, education/training, interaction (see [1, 5, 6]) with virtual objects, none allows the user to capture and manipulate real world objects around them. In more general words, while the idea of displaying intricate *authored* 3-D models is not novel (see [5]), none of the systems known from prior art allow for augmentation with user generated 3D content of *real-world* objects.

A. Hartl et al. present a lightweight method to create coarse 3D models of small-scale objects [Andreas Hartl, Lukas Gruber, Clemens Arth, Stefan Hauswiesner, and Dieter Schmalstieg, "Rapid reconstruction of small objects on mobile phones", Computer Vision and Pattern Recognition Workshops (CVPRW), IEEE Computer Society Conference on, 2011]. The goal of their method is to give the users the possibility to create and maintain AR content themselves without the need for expensive tools and complex interaction. Their algorithm is based on shape-from-silhouette using voxel carving and runs on modern smartphone hardware. 3D models of certain object groups can be generated interactively and instantly. The actual result is visualized continuously using image based rendering methods to inform the user about the actual model quality.

In order to generate accurate views of real objects in order to place them virtually in a scene for AR, one needs to know the accurate texture of these objects and 3D models of them. When dealing with real-world objects, this becomes a challenging problem. Computing accurate 3D models of real-world objects is a research field itself. Furthermore, accurate visual modelling of a real-world object requires understanding its appearance over a variety of views and under various lighting conditions which makes accurate visual modelling extremely hard.

A field of application of AR with real-word objects is, for example, the following: While manually measuring objects such as furniture would provide very accurate results, it does not always provide the sense of space occupied by an object. The look and sheer size of an object cannot be captured by a few numbers denoting the dimensions alone. Moreover, the problem is further complicated if the object in question is heavy and cannot be moved around easily or, even worse, is still not at hand (for example at a shop). It is with these circumstances in mind that the present invention was developed.

From the above it becomes clear that there is a need for an augmented reality system and a method of augmented reality allowing for measurement, 3D modeling and visualization of real world objects such as, for example, furniture.

The objective of the present invention is thus to provide an augmented reality system and a method of augmented reality allowing for measurement, 3D modeling and visualization of real world objects.

This objective is achieved by the method and the system with the features as defined in the claims presented in this document.

The invention can be summarised as follows:

One aspect relates to a novel vision based augmented reality system to facilitate the measurement, 3D modeling and visualization of furniture and other objects preferably on any mobile device. The system utilizes a 2D marker in the scene to allow intuitive and visual interaction with a single image to measure object dimensions and acquire a 3D primitive based model with textures. The textures are automatically extracted from multiple images of the object. The system thus allows the user to capture textured 3D models and place them virtually elsewhere using the marker. Furthermore, according to a further aspect it is shown hereunder how metric measurement and modeling can be performed from a single image even when the camera is *uncalibrated.*

The novel system allows the user to photograph furniture or other objects using their mobile camera and directly measure their sizes from the image alone. Furthermore, once measured, the system allows the user to walk around the object and take more photographs and automatically compute image based textures for the 3D models. Finally, using a marker to determine the user's perspective, the furniture is rendered in real-time in a new position/environment. A standard smartphone equipped with a camera is then capable of providing the user with a live view of the world. Our invention then allows the user to enjoy a live walk about the modeled objects, e.g. furniture, in real-time.

The invention provides a simple way to use minimal geometric shapes as primitives to model real-world objects together with IBR (image based rendering) techniques to determine accurate textures of real-world objects for purposes of augmented reality and other applications. By simply determining a bounding box for the object, the approach according to the invention directly computes the colour textures for the object and creates a virtual model with texture for AR applications.

The method according to the invention allows anyone to build a textured 3D model of an object. The method enables the user to measure precisely the furniture or object in question as well as to collect samples of images as textures which are automatically extracted. Next, the user can share this model and textures with anyone either via the web or directly via messaging or other means of sharing.

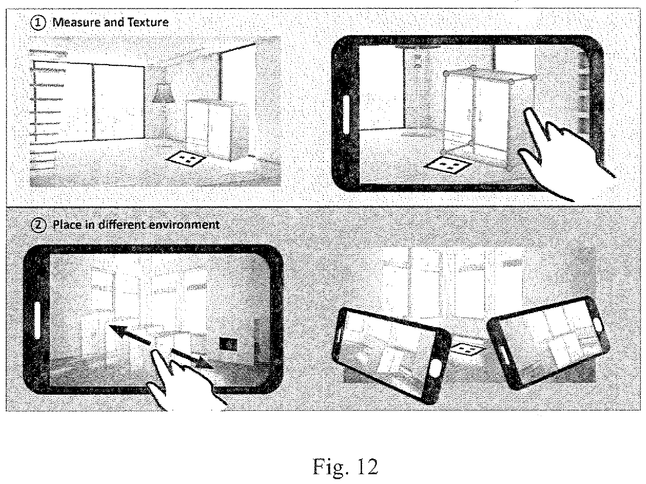

The AR system according to the invention, as illustrated by way of example in Fig. 12, allows the user to measure an object reliably (within acceptable margins of error) and capture images from which a texture mapped 3D model is computed as well as to use the textured models to virtually place and manipulate the object in a new location. Thus, not only the size of the object is determined, but the object can be viewed in real-time in another location. Furthermore, it is possible to virtually walk around the object and to get a better sense of its size and the space occupied by it.

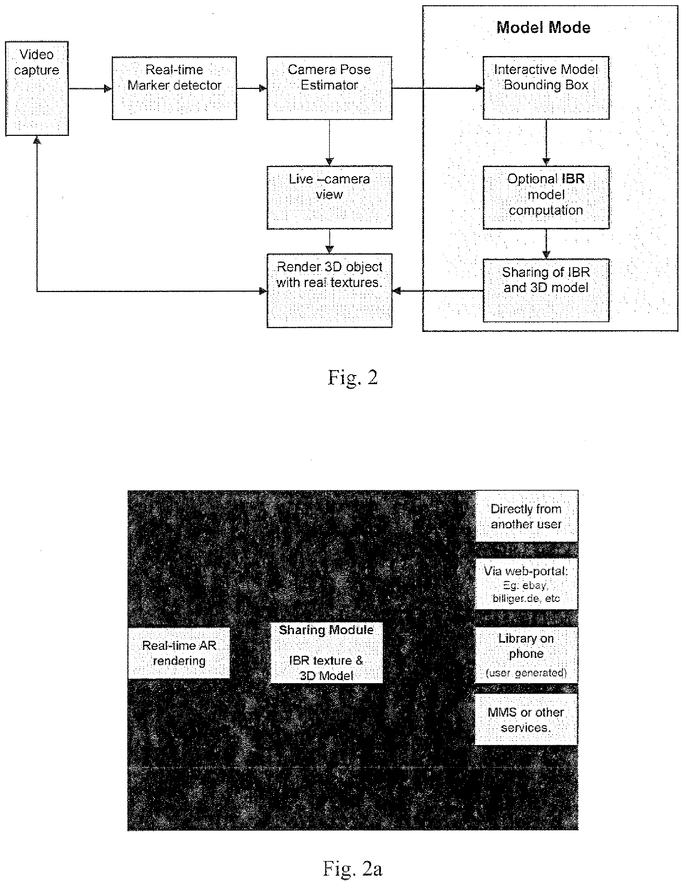

The method described in this document contains the following components that together enable the easy creation of 3D models and "Image based Textures" of real world objects as shown by way of example in Fig. 2.

The method enables any user (without specialized training or skills) to be able to interactively measure accurately any 3D object. Furthermore, the method completely automatically computes a real Image based Texture model from a few images of the object.

Once the 3D model and textures are automatically computed, the user can then easily share these with anyone using multiple possibilities. The method allows the user to share models just like one shares images. Other users can then visualize the 3D object virtually with the same real image textures in remote locations virtually. The remote users simply download the models and then can see the object, e.g. the furniture, in a different environment, e.g. their own homes, from any perspective (viewing angle etc.) in real-time.

The sharing of 3D models and IBR textures enables many applications including e-commerce of objects over the internet. The technology does not only apply for corporations (big or small), but also to individually trading objects online. Instead of simply having images of the object (furniture) being sold, one can now also include these 3D models and textures. The remote buyer can then download the models to his/her mobile device or computer and then visualize the object in their own home or office or other environment.

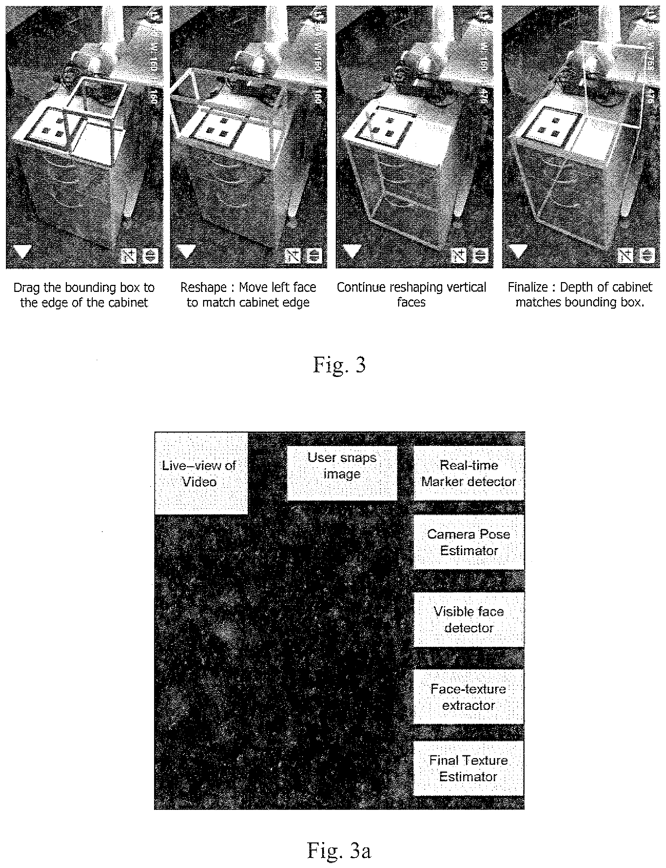

In this system, the marker is used to determine the scale and pose of the camera with respect to the piece of furniture (cupboard, chair, table etc.) being measured. The measurement itself is carried out semi-interactively by the user visually changing the size of a virtual bounding box in the viewfinder of his device so as to enclose the furniture as shown by way of example in Fig. 3.

By doing so, the user not only determines the exact dimensions of the object, but also provides a primitive 3D model of the object. Now, by moving the camera around the object, the user can automatically acquire multiple views of the object for which the camera's pose is determined using the marker, which together with the 3D bounding box provides ample information to compute a visual model for the object. From the multiple images and the 3D model, both view independent (for Lambertian objects) as well as view dependant representations can be determined, that can be used for real-time rendering of the same object, e.g. piece of furniture, in another scene virtually.

Thus, using the primitive and already available 3D bounding box and multiple images of the object, the user can later virtually place this object in any other real scene (augment a remote scene) so as to visualize not only its size there but also its appearance and how it blends with the other objects in that scene.

Visual Metrology

In general, to make any metric and geometric analysis of the image, the camera's *pose* (rotation $\mathbf{R}$ and translation $\mathbf{t}$) with respect to the scene need to be determined. Also, the scale of objects in the image needs to be determined;

perspective images have no notion of depth and scale such that from an image alone it is in fact impossible to make Euclidean measurements without some knowledge of scale and geometry. Therefore, the standard approach of 2D markers similar to [4] is employed. Moreover, as measurement is impossible without a calibrated camera, calibration is done automatically using a few images of the marker (see [8]). Thus, the markers not only provide a scale of objects in the scene, but also allow determining the camera pose.

In order to measure objects in the scene from an image (in the following also referred to as "visual metrology"), it has to be determined where exactly the object of interest lies within the image. Since automatic segmentation of the object of interest is relatively challenging, especially for the purpose of robust measurement, user interaction is preferred to define the extent of the object, e.g. furniture, being measured. As shown by way of example in Fig. 12, the user visually marks out the bounding box as would be visible in the image.

As shown by way of example in Fig. 2, the bounding box already provides a good yet primitive 3D model of the object being measured. While being able to compute the size of an object is interesting, it alone does not convey the full extent of how that object would feel in another environment. In order to get a better and more complete sense of the space occupied by the object, it is necessary to be able to capture the object and place it *virtually* in another location. The user should be able to virtually walk around it and "feel" its presence. This is only possible if the virtual placed furniture not only has the size of the original object but also the appearance.

The key step to the augmented reality application for real-world objects is the ability to virtually place, move and manipulate an object in an environment. To do so, again the marker to determine the camera's pose is employed. Then, a realistic view of the furniture in true size depending on the position of the user is rendered.

The user is enabled to move (translate on the ground) the object and rotate it about its axis. The interaction metaphors are in line with those used in visual metrology.

Image based rendering (IBR) is employed to compute textures for the object model. Once the object's position and size is precisely measured via visual metrology, the user is then capable of capturing multiple still-shots of the furniture. For every image acquired, the system automatically processes it to extract relevant texture information. Moreover, using the marker already in place, one can acquire multiple images from different positions so as to "image" the various sides of the furniture. In the following, details of our semiautomatic method for 3D model and texture extraction for real-time augmentation of scenes with real-world objects will be presented.

From the user's perspective, he/she is provided a live view of the bounding box that represents the object rendered in real-time exactly where the object lies in the scene. As the user moves around the object, the bounding box also relatively is shown to match the position and size of the object. The user then simply clicks to take snapshots of the object from different positions to reveal the different sides/faces of the object.

The user can thus take as many snapshots of the object from different positions as he or she wishes. At every snapshot, we automatically extract the textures for the visible faces of the object from the current image. These current face textures are used together with past face textures previously extracted to compute a final texture of every face. Every time the user takes a snapshot, the method automatically extracts textures from this image for the visible faces of the object. Each extracted face texture is then used together with previously extracted face textures to compute a final texture representation as will be described below.

For every image taken by the user, the system first determines the marker and the pose of the camera relative to it and the user defined bounding-box (in 3D). Using this information, it is determined which of the 6 faces of the bounding box are actually visible in the camera's view. Next, the image projection of the 8 vertices of the wire-frame box in the view of the camera is computed. In doing so, essentially the regions within the image corresponding to every face (side) of the bounding box are determined.

In order to compute a rectangular texture image for every (rectangular) face of the bounding box, one simply needs to morph the corresponding underlying image regions into a rectangle. This image morph in fact is simply the homography relating the four real world corners of the bounding box (in 3D) to the four image corners of the corresponding texture. Once the homography between the 3D corners of a face and its image corners is determined (linear solution), the texture image is easily determined by re-sampling the image region accordingly. Details of this process are described next.

Box description and visibility

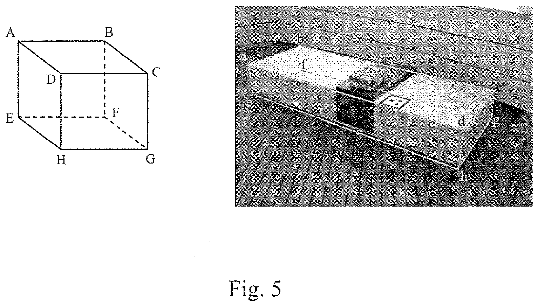

As mentioned above, our goal is to create a 3D texture model of an object, for example the furniture from Fig. 5, based on textures that are extracted from images taken by the user of the real-world object. As shown in Fig. 5, the 3D model of the box is represented by its 3D vertices *A, B, C, D, E, F G, H.* The corresponding 2D image coordinates in the captured image are (*a, b, c, d, e, f g, h*).

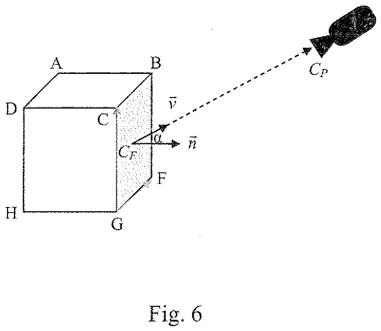

For any object, from any given position of the user, at most 3 faces can be "visible" at once. As shown in the example of Fig. 5, the visible faces of the white couch include faces defined by the vertices *ABCD*, *ADHE* and *DCGH* in the image. In contrast, the faces *ABFE*, *BCGF* and *EPGH* are not visible to the user in the given image. In order to extract textures for the various possible faces, it is first determined which of the 6 possible faces are indeed visible in the given image. Visibility of a face can be tested for using the camera position (given by the vector $\vec{v}$) and the corresponding surface normal $\vec{n}$ of a face as shown below by way of example in Fig. 6.

The surface normals of the object's faces and the camera position are defined simply in terms of the face's corner vertices. Considering, e.g., the face *CBFG*, the center of the face $C_F$ is calculated by finding the mean value of the four vertices of that face:

$$C_F = \frac{C + B + F + G}{4} \quad .$$

The camera vector $\vec{v}$ is the unit length vector between the camera position $C_p$ and the center of the face $C_F$:

$$\vec{v} = \frac{\overrightarrow{C_F C_P}}{\left| \overrightarrow{C_F C_P} \right|} \quad .$$

The vector $\vec{n}$ is obtained from the cross product of two adjacent edges of the face. In our example, edges GF and GC are used:

$$\vec{n} = \frac{\overrightarrow{GF} \times \overrightarrow{GC}}{\left| \overrightarrow{GF} \times \overrightarrow{GC} \right|} \quad .$$

Since $\vec{v}$ and $\vec{n}$ are unit vectors, the dot product represents the cosine of the angle between them. The face is

$$C_i^f = \vec{v} \cdot \vec{n} \, .$$

"visible" only for positive values of

Texture extraction is only performed on faces that are visible. Thus, at any given instance (image), at most 3 textures are extracted, corresponding to any 3 visible faces.

Texture via Face Homographies

For the visible faces, one now computes textures for each of these. That means that the color information for every pixel $Q_i = (X_i, Y_i)$ of the texture (Fig. 6, right) is obtained from some pixel $q_i = (x_i, y_i)$ in the source image (Fig 6, left). To do that, the homography matrix **H** (in the following also simply referred to as "homography") is needed, which relates $Q_i$ with $q_i$.

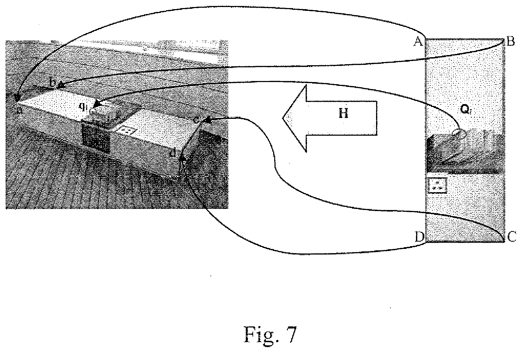

For example, as shown in Fig. 7, every pixel $Q_i$ in texture *ABCD* should map to a pixel within the quadrilateral *abcd*.

The relation of $Q_i$ with $q_i$ through the standard homography matrix **H** is given by:

$$\begin{pmatrix} u \\ v \\ w \end{pmatrix} = H_{3x3} \cdot \begin{pmatrix} X_i \\ Y_i \\ 1 \end{pmatrix} \quad ,$$

wherein $x_i = \dfrac{u}{w}$ and $y_i = \dfrac{v}{w}$ . The homography is calculated finding the linear solution of the equation above using the following constrains relating the four 2D corners of the face and the four corners of the output texture with width $W$ and height $H$ as:

- Corner $A = (1,1)$ of the texture maps to the point a in the image
- Corner $B = (W, 1)$ of the texture maps to the point b in the image
- Corner $C = (W, H)$ of the texture maps to the point c in the image

- Comer $D = (1, H)$ of the texture maps to the point d in the image

Once the homography is obtained, it is used to find and map every pixel in the texture, the corresponding pixel in the source image.

In other words, the homography relates a point in a first plane to its corresponding position in a second under perspective projection.

Referring to Fig. 7, the computed 3D box model along with the computed rotation and translation matrices and the camera intrinsic **K** are used to predict the corners of the box in the image. Thus, when a user takes a picture of the object after having "measured" the object, one immediately knows where every corner of the box would "project to" in that image. These corners define the source image corners $q_i = (x, y_i)$ in the image. Then, the texture is defined as a rectangular image of predefined size as shown by way of example in Fig. 7. Now the homography relates these two rectangular faces as given by:

$$q_i \cong H * Q_i$$

Here, for every rectangular face corner $q_i$ in the image, a known texture corner $Q_i$ is associated. Insofar, **H** is unknown and must be estimated The correspondence between the four corners of the object face and texture provide 8 constraint equations that are sufficient to solve for **H**.

Combining textures: Computing Weights for every Face Texture

From every new image a maximum of 3 face textures can be extracted. Thus, it is possible that over the course of multiple images taken by the user, one can obtain many textures from the same face. Therefore, a criterion is needed to estimate the final texture. In order to combine or select between various estimates of the same face texture, for every extracted face texture a weight is computed that denotes its quality.

To calculate the weight of a texture, two factors are considered:

- The resolution or *area* in pixels of the quadrilateral region in the source image, from where the texture pixels where mapped. The bigger the area the better the resolution of the texture.

- The viewing angle of the camera relative to a face. This value has already been calculated as the cosine of the angle between the camera vector $\vec{v}$ and the surface normal $\vec{n}$ of a face (see above). Usually, this means that a frontal view of the face is preferred to an oblique one.

If the four vertices of a quadrilateral face are $(x_a, y_a)$, $(x_b, y_b)$, $(x_c y_c)$, and $(x_d, y_d)$, the area $A_i^f$ for face $f$ and source image $i$ can be calculated as:

$$A_i^f = \frac{1}{2} \cdot \left| (x_c - x_a) \cdot (y_d - y_b) - (x_d - x_b) \cdot (y_c - y_a) \right| \; .$$

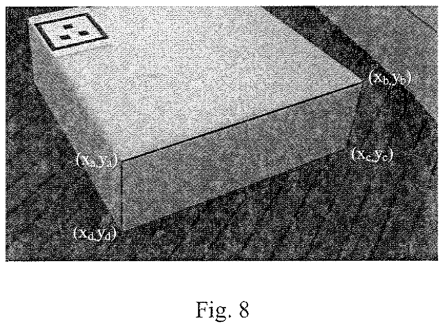

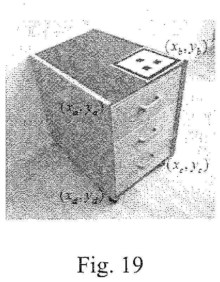

This is exemplarily demonstrated in Figs. 8 and 19.

Together with the visibility factor $C_i^f = \vec{v}_i \cdot \vec{n}_f$ , the weight of a texture can be defined as:

$$w_i^f = A_i^f \cdot C_i^f \; .$$

This value represents the quality of the texture: the higher the weight, the better the texture estimated.

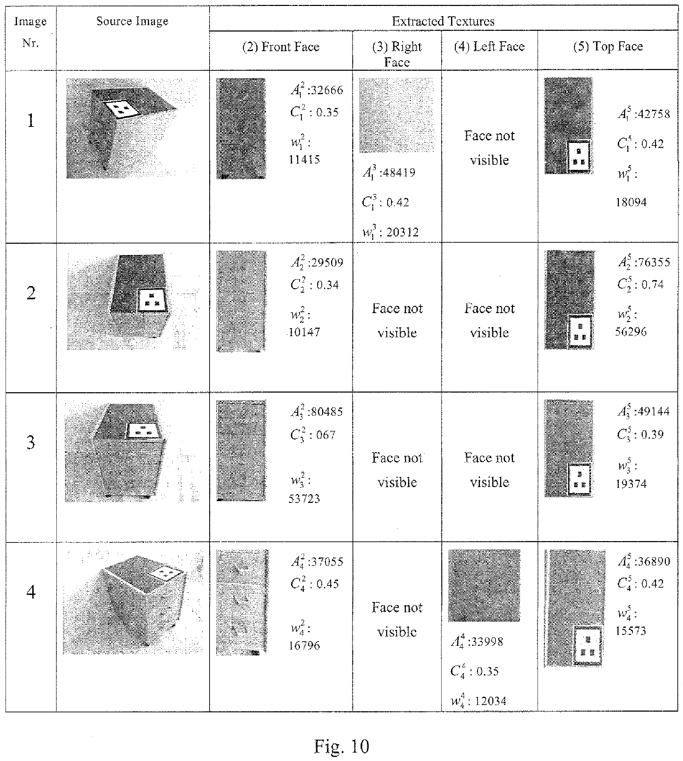

Fig. 10 shows an example of how textures are extracted from the source subsequent images captured by the user. In the following, it is shown how these various textures can be merged together successfully to compute one final texture per face of the object efficiently.

Heuristics for Combining Weighted Face Images

As mentioned above, it is desired to have a final texture for every face of the object. In principle, different approaches are possible to use multiple images of the object, extract the "visible" faces and the corresponding weights and then combine them appropriately. Once we have the weight information as criterion of how good a texture is, different heuristics to get a final texture are possible. In the following, two heuristics (methods) are disclosed that can be used to compute the final face textures. Both methods are greedy approaches, which means that after every image taken by the user is processed, the "best possible" final texture is computed directly. The advantage is that it is not required to save all the extracted textures on the device. At any instance, only 6 face textures representing the final face textures are stored. However, this does not exclude to have other kinds of heuristics that save all extracted textures and create a final image in the future.

Faces from which no information is available remain with a default texture or colour (e.g. transparency, black or chessboard). Furthermore, we allow the object to be symmetric; thus the left side face can be denoted to be similar to the right, thereby unifying the textures.

Best Texture

According to one embodiment, the method always stores only the best extracted face texture from any one image. It does not merge multiple textures into one. For every image acquired, one computes the visible faces and first determines their weights. Then, at every point only the best texture and the corresponding weight is saved. "Best" is defined in terms of the computed weight. We replace face textures with a new texture only if the new texture has a higher weight. In other words, if the currently extracted face weight is better than what was previously computed, one replaces the previous texture with that extracted from the current image:

For every visible face $f_i$:

- If no previous texture of this face has been saved, then save $t_{i\_new}$ as the final texture of the face $f_i$.

- If a texture $t_{i\_old}$ with weight $w_{old}$ has already been saved, then compare the weights of both textures:

    ◦ If $w_{i\_new}$ is greater than $w_{old}$, then replace $t_{i\_old}$ with $t_{i\_new}$ and replace $w_{old}$ with $w_{new}$.

    ◦ Otherwise, keep $t_{i\_old}$ as the actual texture.

It is noticed that this greedy approach leads to sharp images and has a much higher user acceptance than normalized weighted textures.

Weight Average Texture

According to another embodiment, the method combines the pixel values of all extracted textures of a face, giving priority to those textures with higher weights.

Given $N$ images acquired by the user, the value $P_N$ for every pixel in the final texture (using these $N$ images) is calculated by:

$$P_N = \frac{\sum\limits_{i=1}^{N} w_i \cdot p_i}{\sum\limits_{i=1}^{N} w_i} \quad ,$$

where $p_i$ is the value of the pixel in the $i$'th image (extracted texture) taken by the user with corresponding weight $w_i$, and $N$ is the number images captured by the user. Notice that $N$ is the number of extracted textures for a certain face and not the total number of source images. For cases where the face is not visible, the corresponding weight is zero and the image is ignored.

It should be noted that in practice it is not needed to store all the N images in memory in order to compute the weighted final texture. Instead, a final texture representation is kept in terms of a moving average which precludes the need for N independent images, thereby drastically reducing the required memory by a factor of $N$.

Consider the first $t$ images in a sequence of $N$, the pixel value $P_t$ after $t$ textures have been processed, with $1 \leq t \leq N$ is given by:

$$P_t = \frac{\sum_{i=1}^{t} w_i \cdot p_i}{\sum_{i=1}^{t} w_i} = \frac{\tilde{P}_t}{W_t} \, ,$$

where $\tilde{P}_t$ is the non-normalized pixel value and $W_t$ the normalizing sum of weights. Both values are independently saved after a new output texture is created. By doing this, when a new texture $i+1$ is processed, one can compute $P_{t+1}$ without knowing previous values ($i \leq t$) of $w_i$ and $p_i$ as:

$$P_{t+1} = \frac{\tilde{P}_{t+1}}{W_{t+1}} = \frac{\sum_{i=1}^{t} w_i \cdot p_i + w_{t+1} \cdot p_{t+1}}{\sum_{i=1}^{t} w_i + w_{t+1}} = \frac{\tilde{P}_t + w_{t+1} \cdot p_{t+1}}{W_t + w_{t+1}} \, .$$

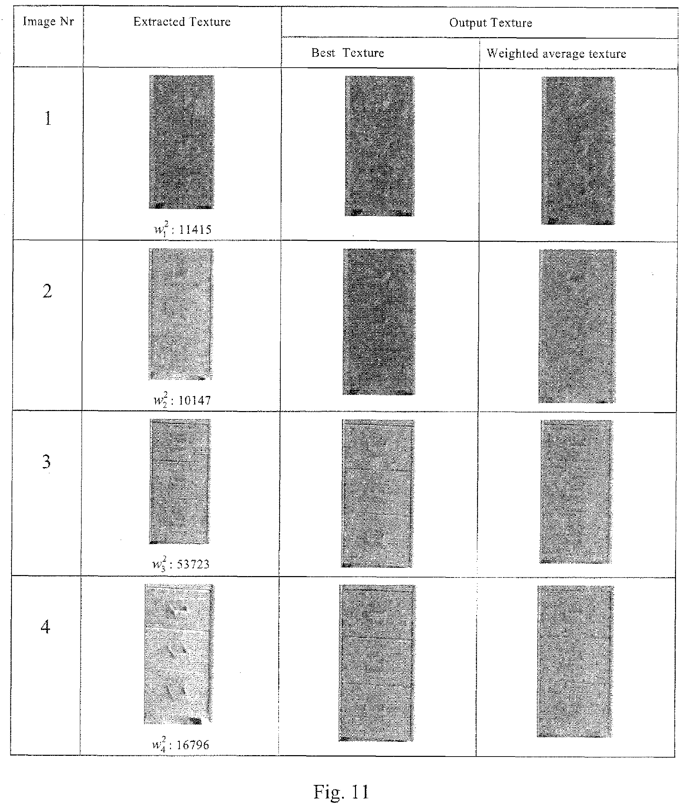

Fig. 11 shows by way of example how both heuristics work for the same set of extracted textures. Face 2 of Fig. 10 is used as an example.

Using an uncalibrated camera

The embodiment as described as follows is even more generic and allows for greater flexibility in measuring objects even when the camera is uncalibrated. The marker is used the same way as described before and a single image is employed to compute both the size of the object and as a side effect the appropriate calibration matrix K of the used camera.

The advantage of this approach is that one can perform 3D model estimation and texture extraction (as a consequence) from images alone without access to the camera intrinsics at all. Thus, even from online images or pre-captured images of objects with the marker in place, one can perform the task of measuring and textured model estimation.

It is assumed the user has taken a picture or has a picture of an object and the marker. As before a marker detection is performed in order to infer the homography between the corners of the marker in the image (say $q_i$) and the physical marker ($Q_i$) (in the plane of the marker) given by the constraint:

$$q_i = H * Q_i$$

Then the method according to this embodiment comprises the steps of:

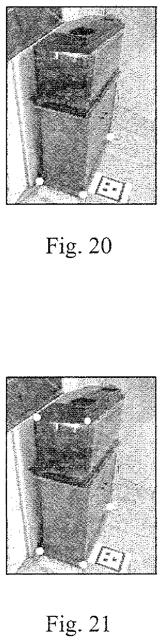

1. From this relationship $H$ is estimated.
2. The user then clicks or indicates various points that define the periphery of the object on the ground plane with the marker as shown by way of example in the Fig. 20.
3. Together with the homography computed in step 1, one then can project every image corner defined by the user to its true location on the ground. Thus one can then determine exactly the length and width of the object.
4. Next, the user essentially presents the system with a corresponding "top" point for one or more of the corners.
5. Next, the system uses these points and the homography to jointly estimate the height of the object while simultaneously determining the intrinsic matrix that satisfies the following constraint.

    a. In general this problem is not solvable; however, one can enforce acceptable constraints on the K matrix to solve the problem.

       i. It is assumed that the camera system has zero skew as well as that the pixels are square (aspect ratio = 1).

$$K = \begin{bmatrix} f & 0 & C_x \\ 0 & f & C_y \\ 0 & 0 & 1 \end{bmatrix}$$

b. The K matrix is then given by:

c. Let the points of the object on the ground plane (with marker be $Q_i = (X_i, Y_i, 0, 1)$ where the Z coordinate is zero (height from floor is zero).

d. Then the corresponding top corners would be $Q_i^t = (X_i, Y_i, \bar{Z}, 1)$. Note that all the top corners are assumed to be at the same height and hence all coordinate of top corners have the same z-coordinate $\bar{Z}$.

e. The next step is the non-linear search (optimization) for $\bar{Z}$, so that the projection of the points in 3D align to those in the image (provided by the user and the marker) while ensuring that the K matrix is as constrained in (b).

  i. This is solved by first determining the projection matrix P by solving the constraint:

$$q_i \cong P * Q$$

  Where $\bar{Q}$ denotes the combination of all points $Q_i$ and $Q_i^t$.

ii. Next we perform RQ decomposition of $\tilde{P}$ to determine $\tilde{K}$ and $\tilde{R}$, the rotation matrix.

iii. This estimate $\tilde{K}$ need not adhere to the required constraint and hence we define the objective function $F$, that is to be minimized as: $F(\tilde{K}) = K(1,2)^2$, corresponding to minimizing the element (1, 2) of the matrix, or thereby minimizing skew.

6. The optimization results in estimation of a non-zero Z, that is essentially the required height of the furniture.

One aspect of the invention relates to a method for generating a 3D model representation of a real-world object, comprising the steps of:

(1a) obtaining a picture of a real-world object together with a marker, the object and the marker being embedded in a real scene;
(1b) detecting the marker in the picture;
(1c) measuring the dimensions of a selected sector in 3D using the information provided by the marker detected in step (1b);
(1d) creating a 3D model representation of the real-world object.

In one preferred embodiment, the marker is a 2D marker, the layout and the real dimensions of the 2D marker being stored in a storing means, wherein the layout comprises: a polygon of pre-defined dimensions, preferably a rectangle or square, for example having a length of 16 cm and a width of 16 cm; a pre-defined identification pattern, for example three dots or squares arranged at the corners of an imaginary triangle, the identification pattern being arranged inside the polygon; wherein preferably the polygon and the identification pattern are printed or painted on a sheet of paper.

Preferably, the method comprises the further steps of:

(3a) analysing the marker's position in the picture;
(3b) computing or estimating the homography H with respect to the marker in the picture; and wherein

preferably the steps (3a) and (3b) are performed after step (1b).

In a further embodiment, the method comprises the further steps of:

(4a) enabling the user to select a sector within the picture, the sector corresponding to a 3D sector in the real-world embedding the object; and

preferably further comprising the steps of:

(4b) computing a perspective view of a virtual bounding box, wherein the virtual bounding box is preferably a cuboid, and more preferably a cube;
(4c) overlaying the picture with the perspective view of the virtual bounding box, wherein the virtual bounding box is preferably placed on top of the marker.

One embodiment of the method comprises the further step of:
(5a) allowing the user to shift each face of the virtual bounding box such that the object is enclosed within the virtual bounding box, the virtual bounding box thereby indicating a sector corresponding to a 3D sector in the real-world embedding the object.

In a further embodiment of the method, at least four, preferably five, corner points of the virtual bounding box are selectable; and the method comprises the further step of:
(6a) enabling the user to select each of the selectable points, preferably by a clicking or touching operation, and to connect the respective point by a drag-and-drop operation to the corresponding corners of the sector to be selected.

Preferably, the method comprises the further step of:
(7a) estimating the calibration of the camera used to obtain the picture provided in step (1a).

In one preferred embodiment of the method, with a first plane being defined as the plane wherein the 2D marker is located and a second plane being defined as an arbitrary plane parallel to and different from the first plane:
step (4a) of enabling the user to select a sector and step (7a) of estimating the calibration are performed together using the steps of:

(8a) enabling the user to select a number of three or more points in the first plane so as to select a base area of the sector to be selected;
(8b) determining the dimensions of the base area using the information provided by the homography H computed or estimated in step (3b);
(8c) enabling the user to select at least one point(s) of a set of points given by the piercing points of the second plane with each of the lines orthogonal to the first plane and piercing the three or more points selected in step (8a), so as to select a height of the sector;
(8d) using the point(s) selected in step (8c) and the homography H to jointly estimate the height of the sector while simultaneously estimating the intrinsic matrix K describing the calibration of the camera.

In an embodiment of the method, in step (8d) the joint estimation of the height of the sector and the intrinsic matrix K is performed using the step:
(9a) performing a line-search, for example a non-linear line-search, for obtaining an optimised estimation of the real height $\overline{Z}$ of the sector such that the projection of the estimated 3D real-world coordinates of the points of the sector corresponding to the points selected in step (8c) onto the image aligns with the respective coordinates of the points of the perspective view of the sector as selected in step (8c).

In a further embodiment of the method, the estimation of the intrinsic matrix K in step (8d) relies on two assumptions:

(i) the camera system has zero skew, and
(ii) the pixels are square with an aspect ratio equal to one; and wherein

the line-search in step (9a) is performed while ensuring that the intrinsic matrix K is as constrained by the assumptions (i) and (ii).

Preferably, step (9a) of performing a line-search comprises the steps of:

(11a) determining the projection matrix P describing the projection of the estimated 3D real-world coordinates of the points of the sector corresponding to the points selected in step (8c) onto the respective coordinates of the points of the perspective view of the sector;
(11b) performing a decomposition, for example an RQ decomposition, of the projection matrix P to obtain first estimations $\tilde{K}$ and $\tilde{R}$ for the intrinsic matrix and the rotation matrix, respectively;
(11c) minimising a suitable objective function F that takes the first estimation of the intrinsic matrix $\tilde{K}$ or at least one element of the first estimation of the intrinsic matrix $\tilde{K}$ as argument(s) in order to minimise the skew described by $\tilde{K}$ ;
(11d) obtaining an estimated value for the real height $\overline{Z}$ of the sector from the result of the minimisation as performed in step (11c).

In one embodiment, the method comprises the further steps of:

(12a) enabling the user to take one or more snapshot(s) of the selected object from various directions using a camera;
(12b) analysing each of the snapshot(s) and extracting information from it; and

wherein preferably step (1a) of obtaining a picture of a real-world object together with a marker is performed by means of a live-view video.

Preferably, step (12b) of analysing each of the snapshot(s) and extracting information from it comprises the steps of:

(13a) evaluating the visibility for each of the faces of the selected sector;
(13b) computing textures for each of the visible faces of the sector; and wherein

preferably step (13a) of evaluating the visibility comprises the following steps, wherein each of the following steps is to be applied to each of the faces of the selected sector:

(13c) finding the mean value of the vertices or the geometrical center of gravity of the face;
(13d) computing the unit vector $\vec{v}$ pointing from the mean value of the vertices or the geometrical center of gravity of the face to the position of the camera, wherein the position of the camera can be obtained using the information provided by the image of the marker located in the picture;
(13e) computing the normal unit vector $\vec{n}$ of the face, for example by taking the cross product of two linearly independent edge vectors of the face and dividing the result by its norm;
(13f) taking the dot product or scalar product of unit vector $\vec{v}$ pointing from the mean value of the vertices or the geometrical center of gravity of the face to the position of the camera and the normal unit vector $\vec{n}$ of the face.

In one embodiment of the method, step (13b) of computing textures comprises the following steps, wherein each of the following steps is to be applied to each of the faces of the selected sector:

(14a) evaluating a homography matrix $H_{Face}$ relating the perspective view of the face visible in the picture to a texture-area, wherein the texture-area is preferably defined as a rectangular image of pre-defined size;
(14b) obtaining a texture by mapping the face onto the texture-area by using the matrix $H_{Face}$.

In a further embodiment, step (1d) of creating a 3D model representation of the real-world object comprises the step of:
(15a) finding an optimised texture for each of the faces of the selected sector by comparing and/or superposing the textures obtained from each of the one or more snapshot(s) taken in step (12a) with step (14b).

In still a further embodiment, step (15a) is performed by taking only the best available texture of the textures obtained from one or more snapshot(s) taken in step (12a).

In yet a further embodiment, step (15a) is performed by evaluating the weighted sum of each textures available from the snapshot(s), wherein

preferably, for each of the faces and each of the snapshot(s), the weights are given by the dot product or scalar product of unit vector $\vec{v}$ pointing from the mean value of the vertices or the geometrical center of gravity of the face to the position of the camera and the normal unit vector $\vec{n}$ of the face.

In one preferred embodiment, the user is enabled to store the 3D model representation or share the 3D model representation, for example online using one of various modalities such as e-mail, MMS, online-portals, etc.

Another aspect of the invention relates to a method for visualising an object in a displayed scene, the method comprising the steps of:

(19a) displaying a scene;
(19b) creating an image of an object represented by the 3D model generated by the method of any of claims 1 to 18;
(19c) overlaying the image of the object onto the displayed scene.

One embodiment of the invention relates to a method for visualising an object in a displayed scene, wherein the scene displayed in step (19a) is static, for example a pre-captured photograph.

A further embodiment of the invention relates to a method for visualising an object in a displayed scene, wherein:

the scene displayed in step (19a) is non-static, for example a live-view video of a real-world scene; and
step (19c) of overlaying the image of the object onto the displayed scene is preferably performed in real-time.

A preferred embodiment of the invention relates to a method for visualising an object in a displayed scene, wherein a marker, for example a 2D marker, is embedded in the real scene, the method comprising the further steps of:

(22a) computing the camera's position relative to the marker;
(22b) adapting the size of the object virtually placed into the displayed scene by using the information computed in step (22a).

In one embodiment of the method for visualising an object in a displayed scene, the user is enabled to manipulate, for example, to translate and/or to rotate, the visualised object within the displayed scene.

A further aspect of the invention relates to a method for virtually augmenting a scene with a real-world object, comprising the steps of:

(24a) generating a 3D model representation of the surface texture(s) of a real-world object according to the method of the invention for generating a 3D model representation of a real-world object;

(24b) visualising an object in a displayed scene according to the method of the invention for visualising an object in a displayed scene.

List of figures:

Fig. 1: A typical example of AR using a 2D marker that is detected and used for augmenting the world with a metrically scaled 3D object. Adapted from [1].

Fig. 2: The various modules that together enable easy capture of the 3D model of the object together with Image based textures for real-time augmented reality rendering.

Fig. 3: Use of a 2D marker for furniture measuring AR applications. The 2D marker is automatically detected in order to determine camera pose and relative size of objects in the scene with respect to their sizes in the image. The shown bounding box is then virtually reshaped and placed to encompass the furniture being measured. This simple approach directly provides the precise size of the furniture.

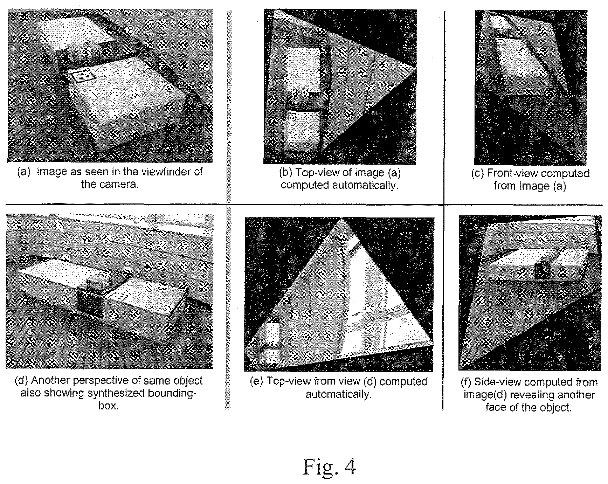

Fig. 4: Using multiple views of a measured object to acquire textures for the corresponding faces of the rectangular block model. The left most column illustrates two sample views of the object being measured with the aid of a marker which provides scale and pose of the camera. The lower left image illustrates the bounding box used to indicate the object being measured. The remaining two columns indicate the synthesized images corresponding to each acquired view. The center column indicates two possible "top-views" of the object, while the right column provides a side and front view, respectively. These views are automatically computed and will be used to compute an effective texture for the object.

Fig. 5: Depending of how the bounding box is defined to match the object, we have correspondences of the 3D vertices $A, B, C, D, E, F, G, H$ to their corresponding 2D image location $a, b, c, d, e, f\, g, h$ in the image.

Fig. 6: Visual representation of vectors camera position $\vec{v}$ and surface normal $\vec{n}$ needed to determine visibility of a face, here: $CBFG$. A positive dot product determines whether the face is visible from the given camera position.

Fig. 7: Homography is calculated based in the correspondences of 3D vertices $A, B,$ C and $D$ to the 2D vertices a, b, c and d. Once obtained, the homography is used to find the corresponding pixel $q_i$ on the source image and map it to the texture $Q_i$.

Fig. 8: The 2D vertices a, b, c, d of face $ABCD$ are used to calculate the area of that face regarding a specific texture.

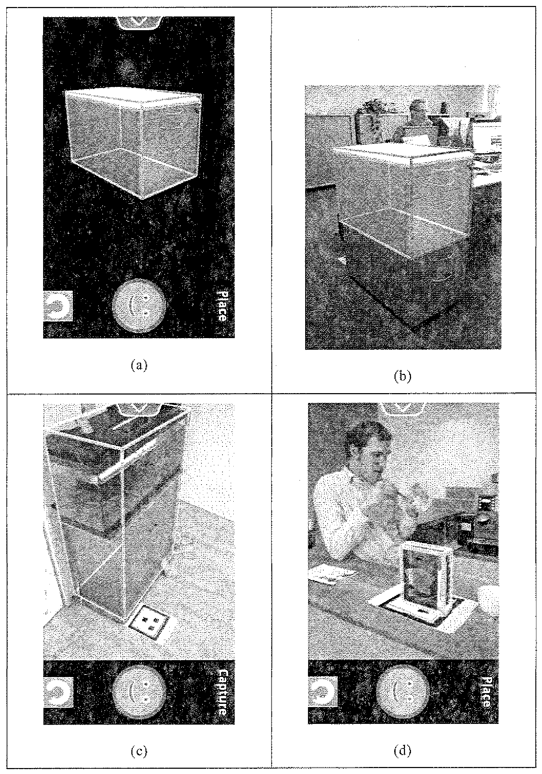

Fig. 9: Examples of textured objects rendered virtually into new scenes. The textures were computed using our automatic method. While (a) represents just a view of the virtually rendered object using extracted textures, (b), (c), and (d) represent virtually placed objects using our extracted textures in new environments. Placing a virtual object with natural textures extracted from the object itself gives the user a much better and realistic view of the object in its new "home."

Fig. 10: For every source image, the viewing angle of every face is calculated to determinate wish faces of the object are visible. For all visible faces, the area is calculated and a weight is given to the texture. Face 1 (back) and 6 (bottom) are not shown, since they are not visible from any view.

Fig. 11: After a face texture is extracted from a source image, an output texture of that face is computed. Notice that no extracted texture is stored during the process. When analyzing the first extracted texture, the output of both heuristics is the same, since there is only one texture. After analyzing the second texture, the first texture remains as best texture, while, for "Weighted average texture" a mixed texture can be observed. After all textures are analyzed, the third remains as the output for "Best Texture," since is the one with highest weight. This fact is also noticed by the "Weighted average texture", where can be observed that the third texture has a preference in the final result.

Fig. 12: The marker based AR system allows the user to interactively define the bounding box of an object and thereby determine its size. The system uses multiple images to determine a textured 3D model also utilized for AR based virtual furnishing.

Fig. 13: Model manipulation with feedback interaction: Here, the user is allowed to choose the specific face of the bounding box to be moved. Then, a simple swipe of the finger either left/right extrudes the box along that face. Since the actual size of the 3D model is internally maintained, the visual overlay provides feedback in the image as to its fit to the object. When satisfied, this directly provides the size and position of the object/furniture with respect to the marker.

Fig. 14: Android smartphone with model manipulation based interface for visual metrology. The user selects faces (b - f): rear, right, left, front and top, in order to directly manipulate a virtual bounding box to fit its view in the image. The control-cube provides the object size and position.

Fig. 15: Result of measurement using a smartphone. Errors in measurement were about 2% of the true measures.

Fig. 16: Direct Interaction - Exploiting the higher display size, one can use the greater resolution to directly point out to the system the correspondences between the unit box shown on the marker to those of the furniture. The system then computes directly the size and pose of the object in the room relative to the marker.

Fig. 17: Modelling the bounding box in terms of a unit box B and the shape transform M. The shape transform models the resizing matrix S that defines the size of the bounding box explicitly as well as the rotation and translation required to align it with the real-world object as shown above.

Fig. 18: A homography is used to find the corresponding pixel $q_i$ on the source image and map it to the texture $Q_i$.

Fig. 19: The 2D vertices *a, b, c, d* of face *ABCD* are used to calculate the area of that face regarding a specific texture.

Fig. 20: Image showing he marker placed next to the object being measured. The user clicks the three visible corners on the base of the object (in the plane with the marker). This is sufficient (together with the homography) to determine the length and width of the object.

Fig. 21: The user here presents the system with a 4th and 5th point pair corresponding to two of the three visible "top corners" of the object.

Other aspects, features, and advantages will be apparent from the summary above as well as from the description that follows, including the figures and the claims.

In the following, two interaction metaphors designed for small and large display devices, respectively, are presented. The mathematical assumptions and constraints imposed by each metaphor and their effect on robust estimation will also be explored. Snapshots of the system in action are also provided as well as results comparing real objects to captured and modeled objects using our system.

Interactive Visual metrology

Measurement of objects in the image requires human interaction as mentioned earlier. The size of the object can be defined in terms of its bounding box in 3D as shown in Fig. 12. The user, however, has to indicate from a single image the visual extents of the bounding box in order to compute the object's size.

In the following, two key interaction paradigms are disclosed that have been developed specifically with the display and interaction surface size in mind. On small smartphone displays, fine manipulations as required for geometric analysis are cumbersome. In contrast, larger displays allow greater freedom and flexibility for such direct interactions. These two contrasting approaches will be explored in the following.

Model Manipulation with Feedback

In general it is sufficient to indicate the object corners that define the bounding box of the object. However, this requires fine motor control for point selection which can be tedious on small screens. Therefore, a coarser movement (swipe to resize) paradigm has been developed that is less tedious while achieving the required accuracy.

The user places the marker on or next to the object so that it is aligned with the edges of the object. Usually aligning the marker with the edges is an intuitive subconscious act. Furthermore, discarding the rotation interaction reduces the number of interactions needed and therefore reduces complexity to the measuring task.

The user first takes a snapshot image that allows for defining the bounding box. Thus, the three extents of the object that define its length, width and height should be visible. The system then processes the image to detect the presence of the marker as well as establishes point correspondences between the marker and its image. These correspondences define a homography **H** between the plane of the marker and the image. Together with the camera intrinsics **K**, the camera pose (**R** | **t**) is then derived (see [7] chapter 5). Having the camera pose and camera intrinsics makes it possible to render 3D objects in the world from the perspective of the user.

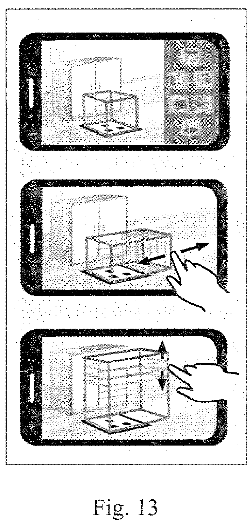

As shown in Fig. 13, the system then displays a *control-cube* of known size on the marker along with a control-pane allowing the user to select specific faces of the box to move and extrude the box thereby moving and resizing it. The user can select one face at a time, and swipe left or right to extrude that face of the box inwards (making the box smaller) or outwards (making it bigger). These operations allow the user to resize as well as translate the box in the plane of the marker.

The system provides real-time feedback to the user by augmenting the acquired image with the correct perspective view of the manipulated control-cube. This perspective feedback is sufficient to reliably align the cubes edges with the bounding edges of the furniture. The size of the extruded control-cube then is exactly the size of the furniture.

It should be noted that the interaction forces either the top or the bottom of the control-cube to lie in the plane of the marker. This ensures avoiding any scale-depth ambiguities, i.e. ambiguities between a close by small object and a faraway large one in the image.

Measuring the real world

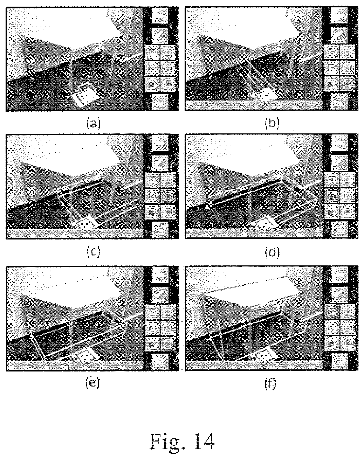

Now, results of using the model manipulation with feedback on small android based smartphone will be presented. As shown in Fig. 14, the user points the smartphone camera at the table with the marker placed below it, aligned with its front edge. The system then detects the marker and computes the pose of the camera (user's perspective) with respect to the marker on the floor, and accordingly augments the view with a virtual control-cube.

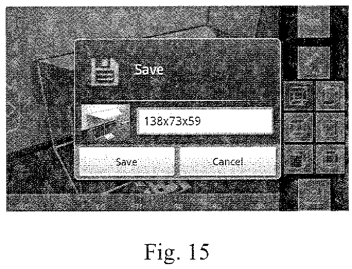

On the right the control-pane allows the user to select various faces of the control-cube. The user first aligns the rear-face of the cube with the back of the table (b). Next starting with the *right*, *left*, *front*, and *top*, the user extrudes out and in as required the various faces to visually determine the bounding box in the real world. Note that although the object is not truly rectangular, it can still be measured accurately. Fig. 15 shows the object to measure ($l \times h \times b$) $138 \times 73 \times 59$ cm$^3$. In fact the table's true dimensions are ($l \times h \times b$) $140 \times 72 \times 60$ cm$^3$. In most cases, the experiments revealed measurements to be within a couple of centimeters of their true sizes.

As noted before, the model manipulation although suited for small screens, is also restrictive since the user relies on feedback in the perspective view. Rotation control was omitted in order to avoid it's complexities under perspective projection. As a consequence, the marker must be precisely aligned with the edge of objects. Failure to align the marker would result in errors in measurement and subsequent steps including texture computation.

Therefore, as an alternative embodiment, an approach as follows can be employed:

Direct Interaction

The model manipulation approach as described above was suitable for small screens but required considerable number of interaction steps to align the control-cube with the extent of the object. Typically the user would need to iterate over the faces by adjusting and readjusting the faces (depending on the perspective) to eventually obtain the 3D size of the object.

However, since the size of an object is determined by purely its length, width and height, all one needs are four corner points along the corresponding edges to compute its size. This indicates that the user should ideally be able to provide all necessary data by simply indicating the four points - four "touch/clicks" on the screen.

Five point Interaction

The large screen size is exploited, which allows for better image resolution and visibility while also more comfortable fine motor control. Moreover, this approach-as shall be demonstrated-does not require the marker to be aligned with the furniture edges unlike before. This allows for more flexibility while providing robust estimates.

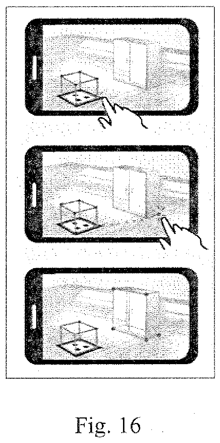

As shown in Fig. 16, the user again takes a snap-shot of the object with the marker. As before the camera intrinsic matrix **K** is used together with the marker based homography **H**, to estimate the pose of the camera with regard to the marker. These parameters are then used to virtually place the control-cube upon the marker as before.

Instead of adjusting various cube faces, all the user must do is to *drag-and-drop* five corners of the cube onto the corresponding five corners of the objects. Note, that this correspondence is defined in the image and not in 3D. Furthermore it should be noted that although one needs four points minimally, the four points must indicate the length, width and height. For example, four points in a plane (one face of the object) do not provide the necessary constraints. By requiring the user to provide five points, it is assured that sufficient data is available in order to measure the object.

Measurement by Reshaping

Now the mathematical model used to estimate the size of furniture will be described. The corners indicated by the user provide a correspondence between the control-cube corners and those of the object. The problem of determining the size of the object is then posed as that of determining the parameters needed to reshape the control-cube and move it in 3D so that resulting (resized) corners of the cube align with the image points indicated by the user. The reshaping comprises two transformations: scaling and then rotation and translation.

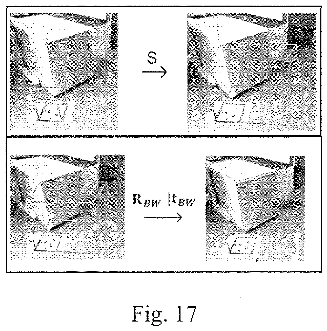

Consider the control-cube in Fig. 17 (top). In order to fit the furniture it must first be scaled appropriately. The resizing is modeled by a diagonal matrix $\mathbf{S} = \mathrm{diag}(s_x, s_y, s_z)$, where $(s_x, s_y, s_z)$ correspond to the *length*, *width* and *height* of the furniture.

The next step is to appropriately rotate and translate the resized cube (see Fig. 17 (bottom)) so as to match the furniture's real 3D location. Only then will the reshaped cube corners align with the points provided by the user.

Rotation is only in the ground plane (about the *z* axis) and can be defined by:

$$\mathbf{R}_{\mathrm{BW}}(\theta) = \begin{pmatrix} \cos\theta & -\sin\theta & 0 \\ \sin\theta & \cos\theta & 0 \\ 0 & 0 & 1 \end{pmatrix} \ ,$$

where $\theta$ is the rotation angle. The translation vector is:

$$\mathbf{t}_{\mathrm{BW}} = \begin{pmatrix} t_x & t_y & t_z \end{pmatrix}^T \ .$$

It should be added that when the marker is on the floor, we can define the translation only in the ground plane, thereby $t_z = 0$, resulting in

$$\mathbf{t}_{\mathrm{BW}} = \begin{pmatrix} t_x & t_y & 0 \end{pmatrix}^T \ .$$

Using **S**, $\mathbf{R}_{\mathrm{BW}}$, and $\mathbf{t}_{\mathrm{BW}}$, we define the reshaping matrix **M** that warps every point of the unit box to the world 3D coordinate of the furniture. The reshaped corners of the control-cube are then given by:

$$Q_w^i = \mathbf{M} \cdot Q_B^i \ ,$$

where

$$\mathbf{M} = \begin{bmatrix} \mathbf{R}_{\mathrm{BW}} \cdot \mathbf{S} \, | \, \mathbf{t}_{\mathrm{BW}} \\ [0,0,0,1] \end{bmatrix} ,$$

$$M = \begin{pmatrix} \cos\theta \cdot s_x & -\sin\theta \cdot s_y & 0 & t_x \\ \sin\theta \cdot s_x & \cos\theta \cdot s_y & 0 & t_y \\ 0 & 0 & s_z & 0 \\ 0 & 0 & 0 & 1 \end{pmatrix}$$

In order to linearise the above constraint (note the trigonometric elements in **M**), we can define **M** as a matrix with 7 degrees of freedom (*dof*) given by:

$$M = \begin{pmatrix} m_{11} & m_{12} & 0 & m_{14} \\ m_{21} & m_{22} & 0 & m_{24} \\ 0 & 0 & m_{33} & 0 \\ 0 & 0 & 0 & 1 \end{pmatrix}$$

Reshaped image constraints

Finally we need to define the relationship between the world 3D coordinates $Q^i_w$ and the 2D coordinates $q^i$ of the furniture in the image (provided by the user). Under perspective projection, the image of any world point $Q^i_w$ is:

$$q^i \cong K \cdot [R_C | t_C] \cdot Q^i_w \ ,$$

Where **K** is the intrinsic camera matrix, and $R_C$ and $t_C$ denote the pose. Combining we define the projection matrix **P** as:

$$P = K \cdot [R_C | t_C] \ .$$

Now it will be defined the relation between any 3D point $Q^i_B$ of the unit control-cube to a 2D point $q^i$ in the image after reshaping as:

$$q^i \cong P \cdot M \cdot Q^i_B$$

where $m_{11}$, $m_{12}$, $m_{21}$, $m_{22}$, $m_{33}$, $m_{14}$, and $m_{24}$ are unknown.

Every pair of points $q^i = (x^i, y^i, 1)^T$ and $Q^i_R = (X^i_R, Y^i_R, Z^i_R, 1)^T$ provide two constraints. Thus four corresponding corners would suffice to solve linearly for the reshaping parameters, thereby determining the size of the furniture. The use of five user provided points provides an over-determined system of equations resulting in a robust estimation of size.

Measuring the real world

Now will be presented results of measuring objects with direct interaction and reshaping based constraints. One clear advantage over the previous approach has been the reduced and simplified interaction needed from user to perform measurement.

Visual metrology without apriory camera calibration

The system can take advantage of larger screen devices by providing a more intuitive user interaction to obtain the box measurements and position. The idea is to obtain the box 3D coordinates in the world using only the information of the 2D markers.

Texture Computation for IBR

As mentioned before, accurate measurement alone does not provide a full sense of the space occupied and appearance of furniture. For this purpose the system is also capable of automatically extracting textures from the object's images. The textures are then used for image based rendering of furniture virtually placed in the scene.

After the 3D location of the box in the world is known, one can extract the face textures from different images. Using the coordinates of the furniture corners in 3D (obtained after measurement) together with the projected image corners multiple homographies per bounding box' face are estimated. Then, for every possible face the following steps determine texture computation:

- **Check Visibility**: For every image, determinate which faces are visible to the camera and which faces are occluded.

- **Extract textures**: Create a texture image of a face, using the available pixels in the original image. Since each texture is a rectangular image, resampling is done using the computed face homographies.

- **Combine textures**: Of all extracted textures of a face create one consistent texture image.

Visibility check

From every image taken by the user it is possible to extract 1 to 3 faces, depending on the camera position. So, first one needs to determinate which faces are visible to the camera. As can be seen in Fig. 6, one computes the unit vectors $\vec{v}$ from the center of the face to the camera location and $\vec{n}$, the normal to the face. These two unit vectors can be calculated, since the 3D location of every vertex of the furniture and the camera position are known. Finally, since $\vec{v}$ and $\vec{n}$ are unit vectors, their dot product $(\vec{v} \cdot \vec{n})$ reveals whether the face is visible ($\vec{v} \cdot \vec{n} > 0$) or occluded ($\vec{v} \cdot \vec{n} \leq 0$).

Texture extraction via face Homographies

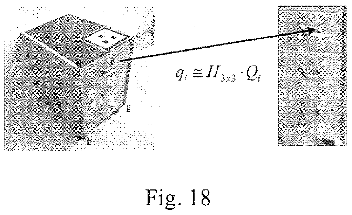

To create a texture, one needs to fill every pixel $q_i$ from the texture with a pixel $Q_i$ obtained from the source image. To do that, we need the homography $H_{3 \times 3}$, which warps any point of the texture to a point in the image as shown in Fig. 18.

The homography is calculated knowing that the four vertices of the textures correspond to the four vertices of the face in the source image.

References:

[1] Chang, Y.-N., Koh, R.K.C., and Been-Lirn Duh, H. Handheld AR games - A triarchic conceptual design framework. 2011 IEEE International Symposium on Mixed and Augmented Reality - Arts, Media, and Humanities, IEEE (2011), 29-36.

[2] Feiner, S., MacIntyre, B., Hollerer, T., and Webster, A. A Touring Machine: Prototyping 3D Mobile Augmented Reality Systems for Exploring the Urban Environment. 97 Proceedings of the 1st IEEE International Symposium on Wearable Computers, (1997).

[3] Kato, H. and Billinghurst, M. Marker tracking and HMD calibration for a video-based augmented reality conferencing system. Proceedings 2nd IEEE and ACM International Workshop on Augmented Reality (IWAR'99), IEEE Comput. Soc, 85-94.

[4] Kato, H., Billinghurst, M., Poupyrev, I., Imamoto, K., and Tachibana, K. Virtual object manipulation on a tabletop AR environment. Proceedings IEEE and ACM International Symposium on Augmented Reality (ISAR 2000), IEEE (2000), 111-119.

[5] Olsson, T. and Salo, M. Online user survey on current mobile augmented reality applications. 2011 10th IEEE International Symposium on Mixed and Augmented Reality, IEEE (2011), 75-84.

[6] de Sa, M., Churchill, E.F., and Isbister, K. Mobile augmented reality. Proceedings of the 13th International Conference on Human Computer Interaction with Mobile Devices and Services - MobileHCI '11, ACM Press (2011), 749.

[7] Yi Ma, Stefano Soatto, Jana Kosecká, S.S.S. An Invitation to 3-D Vision. Springer, 2004.

[8] Zhengyou Zhang. Flexible camera calibration by viewing a plane from unknown orientations. Proceedings of the Seventh IEEE International Conference on Computer Vision, IEEE (1999), 666-673 vol.1.

**Claims**

1. Method for generating a 3D model representation of a real-world object, comprising the steps of:

   (1a) obtaining a picture of a real-world object together with a 2D marker, the object and the marker being embedded in a real scene;
   (1b) detecting the marker in the picture;

      (1b-1) analysing the marker's position in the picture;
      (1b-2) computing or estimating the homography H with respect to the marker in the picture;

   (1c) measuring the dimensions of a selected sector in 3D using the information provided by the marker detected in step (1b) by:
   (1c-1) enabling the user to select a sector within the picture, the sector corresponding to a 3D sector in the real-world embedding the object; and
   further comprising the steps of:

      (1c-2) computing a perspective view of a virtual bounding box, wherein the virtual bounding box is a cuboid;
      (1c-3) overlaying the picture with the perspective view of the virtual bounding box,
      (1c-4) allowing the user to shift each face of the virtual bounding box such that the object is enclosed within the virtual bounding box, the virtual bounding box thereby indicating a sector corresponding to a 3D sector in the real-world embedding the object;
      (1c-5) estimating the calibration of the camera used to obtain the picture provided in step (1a);

   wherein with a first plane being defined as the plane wherein the 2D marker is located and a second plane being defined as an arbitrary plane parallel to and different from the first plane:
   step (1c-1) of enabling the user to select a sector and step (1c-5) of estimating the calibration are performed together using the steps of:

      (1c-6) enabling the user to select a number of three or more points in the first plane so as to select a base area of the sector to be selected;
      (1c-7) determining the dimensions of the base area using the information provided by the homography H computed or estimated in step (1b-2);
      (1c-8) enabling the user to select at least one point(s) of a set of points given by the piercing points of the second plane with each of the lines orthogonal to the first plane and piercing the three or more points selected in step (1c-6), so as to select a height of the sector;
      (1c-9) using the point(s) selected in step (1c-8) and the homography H to jointly estimate the height of the sector while simultaneously estimating the intrinsic matrix K describing the calibration of the camera;

   (1d) creating a 3D model representation of the real-world object by:

      (1d-1) enabling the user to take one or more snapshot(s) of the selected object from various directions using a camera;
      (1d-2) analysing each of the snapshot(s) and extracting information from it.

2. The method of claim 1, wherein:

   the layout and the real dimensions of the 2D marker being stored in a storing means, wherein the layout comprises:

a polygon of pre-defined dimensions, preferably a rectangle or square, for example having a length of 16 cm and a width of 16 cm;

a pre-defined identification pattern, for example three dots or squares arranged at the corners of an imaginary triangle, the identification pattern being arranged inside the polygon; wherein

preferably the polygon and the identification pattern are printed or painted on a sheet of paper.

3. The method of claim 1 or 2, wherein the virtual bounding box is preferably placed on top of the marker.

4. The method of any one of claims 1 to 3, wherein at least four, preferably five, corner points of the virtual bounding box are selectable;

the method comprising the further step of:

(4a) enabling the user to select each of the selectable points, preferably by a clicking or touching operation, and to connect the respective point by a drag-and-drop operation to the corresponding corners of the sector to be selected.

5. The method of claim 1, wherein in step (1c-9) the joint estimation of the height of the sector and the intrinsic matrix K is performed using the step:

(5a) performing a line-search, for example a non-linear line-search, for obtaining an optimised estimation of the real height $\overline{Z}$ of the sector such that the projection of the estimated 3D real-world coordinates of the points of the sector corresponding to the points selected in step (1c-8) onto the image aligns with the respective coordinates of the points of the perspective view of the sector as selected in step (1c-8).

6. The method of claim 5, wherein

the estimation of the intrinsic matrix K in step (1c-9) relies on two assumptions:

(i) the camera system has zero skew, and
(ii) the pixels are square with an aspect ratio equal to one; and wherein

the line-search in step (5a) is performed while ensuring that the intrinsic matrix K is as constrained by the assumptions (i) and (ii).

7. The method of claim 5 or 6, wherein step (5a) of performing a line-search comprises the steps of:

(7a) determining the projection matrix P describing the projection of the estimated 3D real-world coordinates of the points of the sector corresponding to the points selected in step (1c-8) onto the respective coordinates of the points of the perspective view of the sector;

(7b) performing a decomposition, for example an RQ decomposition, of the projection matrix P to obtain first estimations $\tilde{K}$ and $\tilde{R}$ for the intrinsic matrix and the rotation matrix, respectively;

(7c) minimising a suitable objective function F that takes the first estimation of the intrinsic matrix $\tilde{K}$ or at least one element of the first estimation of the intrinsic matrix $\tilde{K}$ as argument(s) in order to minimise the skew described by $\tilde{K}$;

(7d) obtaining an estimated value for the real height $\overline{Z}$ of the sector from the result of the minimisation as performed in step (7c).

8. The method of any one of claims 1 to 7,

wherein step (1a) of obtaining a picture of a real-world object together with a marker is performed by means of a live-view video.

9. The method of any one of claims 1 to 8, wherein

step (1d-2) of analysing each of the snapshot(s) and extracting information from it comprises the steps of:

(9a) evaluating the visibility for each of the faces of the selected sector;
(9b) computing textures for each of the visible faces of the sector; and wherein

preferably step (9a) of evaluating the visibility comprises the following steps, wherein each of the following steps is to be applied to each of the faces of the selected sector:

(9c) finding the mean value of the vertices or the geometrical center of gravity of the face;
(9d) computing the unit vector $\vec{v}$ pointing from the mean value of the vertices or the geometrical center of gravity of the face to the position of the camera, wherein the position of the camera can be obtained using the information provided by the image of the marker located in the picture;

(9e) computing the normal unit vector $\vec{n}$ of the face, for example by taking the cross product of two linearly independent edge vectors of the face and dividing the result by its norm;

(9f) taking the dot product or scalar product of unit vector $\vec{v}$ pointing from the mean value of the vertices or the geometrical center of gravity of the face to the position of the camera and the normal unit vector $\vec{n}$ of the face.

10. The method of any one of claims 1 to 9, wherein step (9b) of computing textures comprises the following steps, wherein each of the following steps is to be applied to each of the faces of the selected sector:

(10a) evaluating a homography matrix $H_{Face}$ relating the perspective view of the face visible in the picture to a texture-area, wherein the texture-area is preferably defined as a rectangular image of pre-defined size;
(10b) obtaining a texture by mapping the face onto the texture-area by using the matrix $H_{Face}$.

11. The method of claim 10, wherein step (1d) of creating a 3D model representation of the real-world object comprises the step of:
(11a) finding an optimised texture for each of the faces of the selected sector by comparing and/or superposing the textures obtained from each of the one or more snapshot(s) taken in step (1d-1) with step (10b).

12. The method of claim 11, wherein step (11a) is performed by taking only the best available texture of the textures obtained from one or more snapshot(s) taken in step (1d-1).

13. The method of claim 11, wherein step (11a) is performed by evaluating the weighted sum of each textures available from the snapshot(s), wherein

preferably, for each of the faces and each of the snapshot(s), the weights are given by the dot product or scalar product of unit vector $\vec{v}$ pointing from the mean value of the vertices or the geometrical center of gravity of the face to the position of the camera and the normal unit vector $\vec{n}$ of the face.

14. The method of any one of claims 1 to 13, wherein the user is enabled to store the 3D model representation or share the 3D model representation, for example online using one of various modalities such as e-mail, MMS, online-portals, etc.

15. Method for visualising an object in a displayed scene, the method comprising the steps of:

(15a) displaying a scene;
(15b) creating an image of an object represented by the 3D model generated by the method of any one of claims 1 to 14;
(15c) overlaying the image of the object onto the displayed scene.

16. The method of claim 15, wherein the scene displayed in step (15a) is static, for example a pre-captured photograph.

17. The method of claim 15, wherein:

the scene displayed in step (15a) is non-static, for example a live-view video of a real-world scene; and
step (15c) of overlaying the image of the object onto the displayed scene is preferably performed in real-time.

18. The method of any one of claims 15 to 17, wherein a marker, for example a 2D marker, is embedded in the real scene, the method comprising the further steps of:

(18a) computing the camera's position relative to the marker;
(18b) adapting the size of the object virtually placed into the displayed scene by using the information computed in step (18a).

19. The method of any of claims 15 to 18, wherein the user is enabled to manipulate, for example, to translate and/or to rotate, the visualised object within the displayed scene.

20. Method for virtually augmenting a scene with a real-world object, comprising the steps of:

(20a) generating a 3D model representation of the surface texture(s) of a real-world object according to the method of any one of claims 1 to 14;
(20b) visualising an object in a displayed scene according to the method of any one of claims 15 to 19.

**Patentansprüche**

1. Verfahren zum Erzeugen einer 3D-Modelldarstellung eines realen Objekts, das die Schritte aufweist:

(1a) Erhalten eines Bilds eines realen Objekts zusammen mit einer 2D-Markierung, wobei das Objekt und die Markierung in eine echte Szene eingebettet sind;
(1b) Erkennen der Markierung im Bild;

(1b-1) Analysieren der Position der Markierung im Bild;
(1b-2) Berechnen oder Schätzen der Homographie H bezüglich der Markierung im Bild;

(1c) Messen der Abmessungen eines ausgewählten Sektors in 3D unter Verwendung der Informationen, die durch die im Schritt (1b) erkannte Markierung bereitgestellt werden, durch:
(1c-1) Ermöglichen, dass der Benutzer einen Sektor innerhalb des Bildes auswählt, wobei der Sektor einem 3D-Sektor in der Realität entspricht, der das Objekt einbettet; und das ferner die Schritte aufweist:

(1c-2) Berechnen einer perspektivischen Ansicht eines virtuellen Begrenzungskastens, wobei der virtuelle Begrenzungskasten ein Quader ist;
(1c-3) Überlagern des Bilds mit der perspektivischen Ansicht des virtuellen Begrenzungskastens,
(1c-4) Ermöglichen, dass der Benutzer jede Seite des virtuellen Begrenzungskastens so verschiebt, dass das Objekt in dem virtuellen Begrenzungskasten eingeschlossen ist, wodurch der virtuelle Begrenzungskasten einen Sektor anzeigt, der einem 3D-Sektor in der Realität entspricht, der das Objekt einbettet;
(1c-5) Schätzen der Kalibrierung der Kamera, die verwendet wird, um das im Schritt (1a) bereitgestellte Bild zu erhalten;

wobei mit einer ersten Ebene, die als die Ebene definiert wird, in der sich die 2D-Markierung befindet, und einer zweiten Ebene, die als eine beliebige Ebene definiert wird, die parallel zur ersten Ebene ist und sich von ihr unterscheidet:
der Schritt (1c-1) des Ermöglichens, dass der Benutzer einen Sektor auswählt, und der Schritt (1c-5) des Schätzens der Kalibrierung zusammen durchgeführt werden unter Verwendung der Schritte:

(1c-6) Ermöglichen, dass der Benutzer eine Anzahl von drei oder mehr Punkten in der ersten Ebene auswählt, um eine Grundfläche des auszuwählenden Sektors auszuwählen;
(1c-7) Bestimmen der Abmessungen der Grundfläche unter Verwendung der Informationen, die durch die im Schritt (1b-2) berechnete oder geschätzte Homographie H bereitgestellt werden;
(1c-8) Ermöglichen, dass der Benutzer mindestens einen Punkt eines Satzes von Punkten auswählt, die durch die Durchstoßpunkte der zweiten Ebene mit jeder der Linien gegeben sind, die zur ersten Ebene orthogonal sind und die im Schritt (1c-6) ausgewählten drei oder mehr Punkte durchstoßen, um eine Höhe des Sektors auszuwählen;
(1c-9) Verwenden der im Schritt (1c-8) ausgewählten Punkt(e) und der Homographie H, um gemeinsam die Höhe des Sektors zu schätzen, während gleichzeitig die intrinsische Matrix K geschätzt wird, die die Kalibrierung der Kamera beschreibt;

(1d) Erzeugen einer 3D-Modelldarstellung des realen Objekts durch:

(1d-1) Ermöglichen, dass der Benutzer einen oder mehrere Schnappschüsse des ausgewählten Objekts aus verschiedenen Richtungen mittels einer Kamera aufnimmt;
(1d-2) Analysieren von jedem der Schnappschüsse und Extrahieren von Informationen aus ihnen.

2. Verfahren nach Anspruch 1, wobei:

die Gestaltung und die wirklichen Abmessungen der 2D-Markierung in einem Speichermittel gespeichert werden, wobei

die Gestaltung aufweist:

ein Vieleck mit vordefinierten Abmessungen, vorzugsweise ein Rechteck oder Quadrat, das zum Beispiel eine Länge von 16 cm und eine Breite von 16 cm aufweist;
ein vordefiniertes Identifikationsmuster, zum Beispiel drei Flecken oder Quadrate, die an den Ecken eines imaginären Dreiecks angeordnet sind, wobei das Identifikationsmuster innerhalb des Vielecks angeordnet ist; wobei
vorzugsweise das Vieleck und das Identifikationsmuster auf einem Blatt Papier gedruckt oder gemalt sind.

3. Verfahren nach Anspruch 1 oder 2, wobei der virtuelle Begrenzungskasten vorzugsweise auf der Markierung angeordnet ist.

4. Verfahren nach einem der Ansprüche 1 bis 3, wobei mindestens vier, vorzugsweise fünf Eckpunkte des virtuellen Begrenzungskastens auswählbar sind;
wobei das Verfahren den weiteren Schritt aufweist:
(4a) Ermöglichen, dass der Benutzer jeden der auswählbaren Punkte, vorzugsweise durch einen Klick- oder Berührungsvorgang auswählt und den jeweiligen Punkt durch einen Zieh-und-Ablege-Vorgang mit den entsprechenden Ecken des auszuwählenden Sektors verbindet.

5. Verfahren nach Anspruch 1, wobei im Schritt (1c-9) die gemeinsame Schätzung der Höhe des Sektors und der intrinsischen Matrix K durchgeführt wird mittels des Schritts:
(5a) Durchführen einer Liniensuche, zum Beispiel einer nicht linearen Liniensuche zum Erhalten einer optimierten Schätzung der wirklichen Höhe $\bar{Z}$ des Sektors, so dass sich die Projektion der geschätzten realen 3D-Koordinaten der Punkte des Sektors, die den im Schritt (1c-8) ausgewählten Punkten entsprechen, auf das Bild mit den jeweiligen Koordinaten der Punkte der perspektivischen Ansicht des Sektors deckt, wie sie im Schritt (1c-8) ausgewählt werden.

6. Verfahren nach Anspruch 5, wobei
die Schätzung der intrinsischen Matrix K im Schritt (1c-9) auf zwei Voraussetzungen beruht:

(i) das Kamerasystem weist eine Schrägstellung von null auf, und
(ii) die Pixel sind quadratisch mit einem Seitenverhältnis, das gleich eins ist; und wobei

die Liniensuche im Schritt (5a) durchgeführt wird, während sichergestellt wird, dass die intrinsische Matrix K solche Randbedingungen wie durch die Voraussetzungen (i) und (ii) aufweist.

7. Verfahren nach Anspruch 5 oder 6, wobei Schritt (5a) des Durchführens einer Liniensuche die Schritte aufweist:

(7a) Bestimmen der Projektionsmatrix P, die die Projektion der geschätzten realen 3D-Koordinaten der Punkte des Sektors, die den im Schritt (1c-8) ausgewählten Punkten entsprechen, auf die jeweiligen Koordinaten der Punkte der perspektivischen Ansicht des Sektors beschreibt;
(7b) Durchführen eine Zerlegung, zum Beispiel einer RQ-Zerlegung der Projektionsmatrix P, um erste Schätzungen $\tilde{K}$ und $\tilde{R}$ für die intrinsische Matrix bzw. die Rotationsmatrix zu erhalten;
(7c) Minimieren einer geeigneten Zielfunktion F, die die erste Schätzung der intrinsischen Matrix $\tilde{K}$ oder mindestens ein Element der ersten Schätzung der intrinsischen Matrix $\tilde{K}$ als Argumente nimmt, um die durch $\tilde{K}$ beschriebene Schrägstellung zu minimieren;
(7d) Erhalten eines Schätzwerts für die wirkliche Höhe $\bar{Z}$ des Sektors aus dem Ergebnis der im Schritt (7c) durchgeführten Minimierung.

8. Verfahren nach einem der Ansprüche 1 bis 7,
wobei der Schritt (1a) zum Erhalten eines Bilds eines realen Objekts zusammen mit einer Markierung mittels eines Live-View-Videos durchgeführt wird.

9. Verfahren nach einem der Ansprüche 1 bis 8, wobei
der Schritt (1d-2) des Analysierens eines jeden der Schnappschüsse und Extrahierens von Informationen aus ihnen die Schritte aufweist:

(9a) Bewerten der Sichtbarkeit für jede der Flächen des ausgewählten Sektors;
(9b) Berechnen von Texturen für jede der sichtbaren Flächen des Sektors; und wobei der Schritt (9a) des Bewertens der Sichtbarkeit vorzugsweise die folgenden Schritte aufweist, wobei jeder der folgenden Schritte auf jede der Flächen des ausgewählten Sektors angewendet werden soll:

(9c) Feststellen des Mittelwerts der Eckpunkte oder des geometrischen Schwerpunkts der Fläche;

(9d) Berechnen des Einheitsvektors $\vec{v}$, der vom Mittelwert der Eckpunkte oder dem geometrischen Schwerpunkt der Fläche zur Position der Kamera zeigt, wobei die Position der Kamera unter Verwendung der Informationen erhalten werden kann, die durch die Abbildung der Markierung geliefert werden, die sich im Bild befindet;

(9e) Berechnen des normalen Einheitsvektors $\vec{n}$ der Fläche, zum Beispiel durch Bilden des Kreuzprodukts von zwei linear unabhängigen Kantenvektoren der Fläche und Dividieren des Ergebnisses durch seine Norm;

(9f) Bilden des inneren Produkts oder des Skalarprodukts des Einheitsvektors $\vec{v}$, der vom Mittelwert der Eckpunkte oder dem geometrischen Schwerpunkt der Fläche zur Position der Kamera zeigt, und des normalen Einheitsvektors $\vec{n}$ der Fläche.

10. Verfahren nach einem der Ansprüche 1 bis 9, wobei der Schritt (9b) des Berechnens von Texturen die folgenden Schritte aufweist, wobei jeder der folgenden Schritte auf jede der Flächen des ausgewählten Sektors angewendet werden soll:

(10a) Bewerten einer Homographiematrix $H_{Face}$, die die perspektivische Ansicht der im Bild sichtbaren Fläche mit einem Texturbereich verknüpft, wobei der Texturbereich vorzugsweise als ein rechteckiges Bild mit einer vordefinierten Größe definiert wird;

(10b) Erhalten einer Textur durch Abbilden der Fläche auf den Texturbereich durch Verwenden der Matrix $H_{Face}$.

11. Verfahren nach Anspruch 10, wobei der Schritt (1d) des Erzeugens einer 3D-Modelldarstellung des realen Objekts den Schritt aufweist:

(11a) Feststellen einer optimierten Textur für jede der Flächen des ausgewählten Sektors durch Vergleichen und/oder Überlagern der Texturen, die jeweils aus dem einen oder den mehreren im Schritt (1d-1) aufgenommenen Schnappschüssen erhalten werden, mit Schritt (10b).

12. Verfahren nach Anspruch 11, wobei der Schritt (11a) durchgeführt wird, indem nur die beste verfügbare Textur der Texturen genommen wird, die aus einem oder mehreren im Schritt (1d-1) aufgenommenen Schnappschüssen erhalten werden.

13. Verfahren nach Anspruch 11, wobei Schritt (11a) durch Bewerten der gewichteten Summe aller Texturen durchgeführt wird, die aus den Schnappschüssen erhältlich sind, wobei

vorzugsweise für jede der Flächen und jeden der Schnappschüsse die Gewichte durch das innere Produkt oder das Skalarprodukt des Einheitsvektors $\vec{v}$, der vom Mittelwert der Eckpunkte oder dem geometrischen Schwerpunkt der Fläche zur Position der Kamera zeigt, und des normalen Einheitsvektors $\vec{n}$ der Fläche gegeben sind.

14. Verfahren nach einem der Ansprüche 1 bis 13, wobei es dem Benutzer ermöglicht wird, die 3D-Modelldarstellung zu speichern oder die 3D-Modelldarstellung zum Beispiel online mittels einer von verschiedenen Arten wie E-Mail, MMS, Online-Portalen usw. zu teilen.

15. Verfahren zum Visualisieren eines Objekts in eine angezeigte Szene, wobei das Verfahren die Schritte aufweist:

(15a) Anzeigen einer Szene;

(15b) Erzeugen eines Bilds eines Objekts, das durch das 3D-Modell repräsentiert wird, das durch das Verfahren nach einem der Ansprüche 1 bis 14 erzeugt wird;

(15c) Überlagern des Bilds des Objekts auf die angezeigte Szene.

16. Verfahren nach Anspruch 15, wobei die im Schritt (15a) angezeigte Szene statisch ist, zum Beispiel eine im Voraus aufgenommene Fotografie.

17. Verfahren nach Anspruch 15, wobei:

die im Schritt (15a) angezeigte Szene nicht statisch ist, zum Beispiel ein Live-View-Video einer realen Szene; und der Schritt (15c) des Überlagerns des Bilds des Objekts auf die angezeigte Szene vorzugsweise in Echtzeit durchgeführt wird.

18. Verfahren nach einem der Ansprüche 15 bis 17, wobei eine Markierung, zum Beispiel eine 2D-Markierung in die echte Szene eingebettet wird, wobei das Verfahren die weiteren Schritte aufweist:

(18a) Berechnen der Position der Kamera relativ zur Markierung;
(18b) Anpassen der Größe des Objekts, das virtuell in der angezeigten Szene angeordnet wird, durch Verwendung der im Schritt (18a) berechneten Informationen.

19. Verfahren nach einem der Ansprüche 15 bis 18, wobei es dem Benutzer ermöglicht wird, das visualisierte Objekt innerhalb der angezeigten Szene zu manipulieren, zum Beispiel zu verschieben und/oder zu drehen.

20. Verfahren zum virtuellen Erweitern einer Szene mit einem realen Objekt, das die Schritte aufweist:

(20a) Erzeugen einer 3D-Modelldarstellung der Oberflächentextur(en) eines realen Objekts gemäß dem Verfahren nach einem der Ansprüche 1 bis 14;
(20b) Visualisieren eines Objekts in einer angezeigten Szene gemäß dem Verfahren nach einem der Ansprüche 15 bis 19.

**Revendications**

1. Procédé de génération d'une modélisation en 3D d'un objet du monde réel, comprenant les étapes suivantes :

(1a) obtention d'une image d'un objet du monde réel avec un marqueur 2D, l'objet et le marqueur étant intégrés dans une scène réelle ;
(1b) détection du marqueur dans l'image ;

(1b-1) analyse de la position du marqueur dans l'image ;
(1b-2) calcul ou estimation de l'homographie H par rapport au marqueur dans l'image ;

(1c) mesure des dimensions d'un secteur sélectionné en 3D au moyen des informations fournies par le marqueur détecté lors de l'étape (1b) :
(1c-1) en autorisant l'utilisateur à sélectionner un secteur à l'intérieur de l'image, ledit secteur correspondant à un secteur 3D dans le monde réel où est intégré l'objet ; et comprenant en outre les étapes suivantes :

(1c-2) calcul d'une vue en perspective d'une boîte de délimitation virtuelle, ladite boîte de délimitation virtuelle étant un parallélépipède ;
(1c-3) superposition de la vue en perspective de la boîte de délimitation virtuelle sur l'image,
(1c-4) autorisation accordée à l'utilisateur de décaler chaque face de la boîte de délimitation virtuelle de manière à enfermer l'objet dans la boîte de délimitation virtuelle, ladite boîte de délimitation virtuelle indiquant ainsi un secteur correspondant à un secteur 3D in le monde réel où est intégré l'objet ;
(1c-5) estimation de la calibration de la caméra utilisée pour obtenir l'image délivrée lors de l'étape (1a) ;

où, avec un premier plan défini en tant que plan où est situé le marqueur 2D et un deuxième plan défini en tant que plan arbitraire parallèle au premier plan et différent de celui-ci :
l'étape (1c-1) d'autorisation accordée à l'utilisateur de sélectionner un secteur et l'étape (1c-5) d'estimation de calibration sont exécutées ensemble au moyen des étapes :

(1c-6) d'autorisation accordée à l'utilisateur de sélectionner un nombre de trois points ou plus dans le premier plan de manière à sélectionner une surface de base du secteur à sélectionner ;
(1c-7) détermination des dimensions de la surface de base au moyen des informations fournies par l'homographie H calculé ou estimé lors de l'étape (1b-2) ;
(1c-8) autorisation accordée à l'utilisateur de sélectionner au moins un point d'un ensemble de points défini par les points de traversée du deuxième plan avec chacune des lignes orthogonales au premier plan et passant par les au moins trois points sélectionnés lors de l'étape (1c-6), de manière à sélectionner une hauteur du secteur ;
(1c-9) utilisation du ou des points sélectionnés lors de l'étape (1c-8) et de l'homographie H pour estimer conjointement la hauteur du secteur en estimant simultanément la matrice intrinsèque K décrivant la calibration de la caméra ;

(1d) création d'une modélisation en 3D de l'objet du monde réel par :

(1d-1) autorisation accordée à l'utilisateur de prendre une ou plusieurs photos de l'objet sélectionné dans différentes directions au moyen d'une caméra ;
(1d-2) analyse de chacune des photos et extraction d'informations de celles-ci.

2. Procédé selon la revendication 1, où :

la structure et les dimensions effectives du marqueur 2D sont mémorisés dans un moyen de stockage, ladite structure comprenant :

un polygone de dimensions prédéfinies, préférentiellement un rectangle ou un carré, ayant par exemple une longueur de 16 cm et une largeur de 16 cm ;
un motif d'identification prédéfini, tel que trois points ou carrés disposés dans les coins d'un triangle imaginaire, ledit motif d'identification étant disposé à l'intérieur du polygone ;
le polygone et le motif d'identification étant préférentiellement imprimés ou peints sur une feuille de papier.

3. Procédé selon la revendication 1 ou la revendication 2, où la boîte de délimitation virtuelle est préférentiellement placée au sommet du marqueur.

4. Procédé selon l'une des revendications 1 à 3, où au moins quatre, préférentiellement cinq points d'angle de la boîte de délimitation virtuelle sont sélectionnables ;
ledit procédé comprenant en outre l'étape suivante :
(4a) autorisation accordée à l'utilisateur de sélectionner chacun des points sélectionnables, préférentiellement par clic ou opération tactile, et de relier chaque point au coin correspondant du secteur à sélectionner par opération de glisser/déposer.

5. Procédé selon la revendication 1, où lors de l'étape (1c-9), l'estimation conjointe de la hauteur du secteur et de la matrice intrinsèque K est effectuée au moyen de l'étape suivante :
(5a) exécution d'une recherche de ligne, telle qu'une recherche de ligne non linéaire, afin d'obtenir une estimation optimisée de la hauteur effective $\bar{Z}$ du secteur, de manière à aligner la projection des coordonnées 3D dans le monde réel estimées des points du secteur correspondant aux points sélectionnés lors de l'étape (1c-8) sur l'image, avec les coordonnées respectives des points de la vue en perspective du secteur tels que sélectionnés lors de l'étape (1c-8).

6. Procédé selon la revendication 5, où
l'estimation de la matrice intrinsèque K lors de l'étape (1c-9) s'appuie sur deux hypothèses :

(i) le système de caméra a une inclinaison zéro, et
(ii) les pixels sont carrés avec un rapport hauteur/largeur égal à un ; et où la recherche de ligne lors de l'étape (5a) est exécutée en veillant à ce que la matrice intrinsèque K soit dépendante des hypothèses (i) et (ii).

7. Procédé selon la revendication 5 ou la revendication 6, où l'étape (5a) d'exécution d'une recherche de ligne comprend les étapes suivantes :

(7a) détermination de la matrice de projection P décrivant la projection des coordonnées 3D dans le monde réel estimées des points du secteur correspondant aux points sélectionnés lors de l'étape (1c-8), sur les coordonnées respectives des points de la vue en perspective du secteur ;
(7b) exécution d'une décomposition, telle qu'une décomposition RQ, de la matrice de projection P afin d'obtenir de premières estimations $\tilde{K}$ et $\tilde{R}$ pour la matrice intrinsèque et la matrice de rotation, respectivement ;
(7c) minimisation d'une fonction objective adaptée F prenant la première estimation de la matrice intrinsèque $\tilde{K}$ ou au moins un élément de la première estimation de la matrice intrinsèque $\tilde{K}$ comme argument afin de minimiser l'inclinaison décrite par $\tilde{K}$ ;
(7d) obtention d'une valeur estimée pour la hauteur effective $\bar{Z}$ du secteur à partir du résultat de la minimisation exécutée lors de l'étape (7c).

8. Procédé selon l'une des revendications 1 à 7,
où l'étape (1a) d'obtention d'une image d'un objet du monde réel avec un marqueur est exécutée au moyen d'une vidéo de vue en direct.

9. Procédé selon l'une des revendications 1 à 8, où
l'étape (1d-2) d'analyse de chacune des photos et d'extraction d'informations de celle-ci comprend les étapes suivantes :

(9a) évaluation de visibilité pour chacune des faces du secteur sélectionné ;
(9b) calcul de textures pour chacune des faces visibles du secteur ; et où l'étape (9a) d'évaluation de visibilité comprend préférentiellement les étapes suivantes, chacune des étapes suivantes devant être appliquée pour chacune des faces du secteur sélectionné :
(9c) obtention de la valeur moyenne des sommets ou du centre de gravité géométrique de la face ;
(9d) calcul du vecteur unitaire $\vec{v}$ pointant à partir de la valeur moyenne des sommets ou du centre de gravité géométrique de la face vers l'emplacement de la caméra, l'emplacement de la caméra pouvant être obtenu au moyen des informations fournies par l'image du marqueur située dans l'image ;
(9e) calcul du vecteur unitaire normal $\vec{n}$ de la face, par exemple en prenant le produit vectoriel de deux vecteurs d'arête linéairement indépendants de la face et en divisant le résultat par sa norme ;
(9f) calcul du produit ponctuel ou du produit scalaire du vecteur unitaire $\vec{v}$ pointant à partir de la valeur moyenne des sommets ou du centre de gravité géométrique de la face vers l'emplacement de la caméra et du vecteur unitaire normal $\vec{n}$ de la face.

10. Procédé selon l'une des revendications 1 à 9, où l'étape (9b) de calcul de textures comprend les étapes suivantes, chacune des étapes suivantes devant être appliquée à chacune des faces du secteur sélectionné :

(10a) évaluation d'une matrice d'homographie $H_{Face}$ corrélant la vue en perspective de la face visible dans l'image à une surface de texture, ladite surface de texture étant préférentiellement définie comme image rectangulaire de grandeur prédéfinie ;
(10b) obtention d'une texture par mappage de la face sur la surface de texture au moyen de la matrice $H_{Face}$.

11. Procédé selon la revendication 10, où l'étape (1d) de création d'une modélisation en 3D de l'objet du monde réel comprend l'étape suivante :
(11a) recherche d'une texture optimisée pour chacune des faces du secteur sélectionné par comparaison et/ou superposition avec l'étape (10b) des textures obtenues à partir de chacune des photos prises lors de l'étape (1d-1).

12. Procédé selon la revendication 11, où l'étape (11a) est exécutée en ne retenant que la meilleure texture disponible parmi les textures obtenues à partir de chacune des photos prises lors de l'étape (1d-1).

13. Procédé selon la revendication 11, où l'étape (11a) est exécutée par évaluation de la somme pondérée de toutes les textures disponibles à partir des photos, où préférentiellement, pour chacune des faces et chacune des photos, les pondérations sont données par le produit ponctuel ou le produit scalaire du vecteur unitaire $\vec{v}$ pointant à partir de la valeur moyenne des sommets ou du centre de gravité géométrique de la face vers l'emplacement de la caméra et du vecteur unitaire normal $\vec{n}$ de la face.

14. Procédé selon l'une des revendications 1 à 13, où l'utilisateur est autorisé à mémoriser la modélisation en 3D ou partager la modélisation en 3D, notamment en ligne au moyen d'une parmi plusieurs modalités telles que courrier électronique, MMS, portails en ligne, etc.

15. Procédé de visualisation d'un objet dans une scène affichée, ledit procédé comprenant les étapes suivantes :

(15a) affichage d'une scène ;
(15b) création d'une image d'un objet représenté par le modèle 3D généré par le procédé selon l'une des revendications 1 à 14 ;
(15c) superposition de l'image de l'objet à la scène affichée.

16. Procédé selon la revendication 15, où la scène affichée lors de l'étape (15a) est statique, par exemple une photographie prise antérieurement.

17. Procédé selon la revendication 15, où :

la scène affichée lors de l'étape (15a) n'est pas statique, par exemple une vidéo de vue en direct d'une scène du monde réel ; et

l'étape (15c) de superposition de l'image de l'objet sur la scène affichée est préférentiellement exécutée en temps réel.

18. Procédé selon l'une des revendications 15 à 17, où un marqueur, tel qu'un marqueur 2D, est intégré dans la scène réelle, ledit procédé comprenant en outre les étapes suivantes :

(18a) calcul de la position de caméra par rapport au marqueur ;

(18b) adaptation de la grandeur de l'objet virtuellement placé dans la scène affichée au moyen des informations calculées lors de l'étape (18a).

19. Procédé selon l'une des revendications 15 à 18, où l'utilisateur est autorisé à manipuler, par exemple à translater l'objet visualisé à l'intérieur de la scène affichée et/ou à lui faire subir une rotation.

20. Procédé d'augmentation virtuelle d'une scène avec un objet du monde réel, comprenant les étapes suivantes :

(20a) génération d'une modélisation en 3D de la ou des textures de surface d'un objet du monde réel conformément au procédé selon l'une des revendications 1 à 14 ;

(20b) visualisation d'un objet dans une scène affichée conformément au procédé selon l'une des revendications 15 à 19.

Fig. 1

Fig. 2

Fig. 2a

Drag the bounding box to the edge of the cabinet

Reshape : Move left face to match cabinet edge

Continue reshaping vertical faces

Finalize : Depth of cabinet matches bounding box.

Fig. 3

Fig. 3a

(a) Image as seen in the viewfinder of the camera.

(b) Top-view of image (a) computed automatically.

(c) Front-view computed from Image (a)

(d) Another perspective of same object also showing synthesized bounding-box.

(e) Top-view from view (d) computed automatically.

(f) Side-view computed from image(d) revealing another face of the object.

Fig. 4

Fig. 5

Fig. 6

Fig. 7

Fig. 8

(a)

(b)

(c)

(d)

| Image Nr. | Source Image | Extracted Textures | | | |
|---|---|---|---|---|---|
| | | (2) Front Face | (3) Right Face | (4) Left Face | (5) Top Face |
| 1 | | $A_1^2$ :32666 $C_1^2$ : 0.35 $w_1^2$ : 11415 | $A_1^3$ :48419 $C_1^3$ : 0.42 $w_1^3$ : 20312 | Face not visible | $A_1^5$ :42758 $C_1^5$ : 0.42 $w_1^5$ : 18094 |
| 2 | | $A_2^2$ :29509 $C_2^2$ : 0.34 $w_2^2$ : 10147 | Face not visible | Face not visible | $A_2^5$ :76355 $C_2^5$ : 0.74 $w_2^5$ : 56296 |
| 3 | | $A_3^2$ :80485 $C_3^2$ : 067 $w_3^2$ : 53723 | Face not visible | Face not visible | $A_3^5$ :49144 $C_3^5$ : 0.39 $w_3^5$ : 19374 |
| 4 | | $A_4^2$ :37055 $C_4^2$ : 0.45 $w_4^2$ : 16796 | Face not visible | $A_4^4$ :33998 $C_4^4$ : 0.35 $w_4^4$ : 12034 | $A_4^5$ :36890 $C_4^5$ : 0.42 $w_4^5$ : 15573 |

Fig. 10

| Image Nr | Extracted Texture | Output Texture | |
| --- | --- | --- | --- |
| | | Best Texture | Weighted average texture |
| 1 | $w_1^2$: 11415 | | |
| 2 | $w_2^2$: 10147 | | |
| 3 | $w_3^2$: 53723 | | |
| 4 | $w_4^2$: 16796 | | |

Fig. 11

Fig. 12

Fig. 13

Fig. 14

Fig. 15

Fig. 16

Fig. 17

$$q_i \cong H_{3x3} \cdot Q_i$$

Fig. 18

Fig. 19

Fig. 20

Fig. 21

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ANDREAS HARTL ; LUKAS GRUBER ; CLEMENS ARTH ; STEFAN HAUSWIESNER ; DIETER SCHMALSTIEG.** Rapid reconstruction of small objects on mobile phones. *Computer Vision and Pattern Recognition Workshops (CVPRW), IEEE Computer Society Conference on,* 2011
- Handheld AR games - A triarchic conceptual design framework. **CHANG, Y.-N. ; KOH, R.K.C. ; BEEN-LIRN DUH, H.** 2011 IEEE International Symposium on Mixed and Augmented Reality - Arts, Media, and Humanities. IEEE, 2011, 29-36
- **FEINER, S. ; MACINTYRE, B. ; HOLLERER, T. ; WEBSTER, A.** A Touring Machine: Prototyping 3D Mobile Augmented Reality Systems for Exploring the Urban Environment. *97 Proceedings of the 1st IEEE International Symposium on Wearable Computers,* 1997
- Marker tracking and HMD calibration for a video-based augmented reality conferencing system. **KATO, H. ; BILLINGHURST, M.** Proceedings 2nd IEEE and ACM International Workshop on Augmented Reality (IWAR'99). IEEE Comput. Soc, 85-94
- Virtual object manipulation on a table-top AR environment. **KATO, H. ; BILLINGHURST, M. ; POUPYREV, I. ; IMAMOTO, K. ; TACHIBANA, K.** Proceedings IEEE and ACM International Symposium on Augmented Reality (ISAR 2000). IEEE, 2000, 111-119
- Online user survey on current mobile augmented reality applications. **OLSSON, T. ; SALO, M.** 2011 10th IEEE International Symposium on Mixed and Augmented Reality. IEEE, 2011, 75-84
- Mobile augmented reality. **DE SA, M. ; CHURCHILL, E.F. ; ISBISTER, K.** Proceedings of the 13th International Conference on Human Computer Interaction with Mobile Devices and Services - MobileHCI '11. ACM Press, 2011, 749
- **YI MA ; STEFANO SOATTO ; JANA KOSECKÁ.** S.S.S. An Invitation to 3-D Vision. Springer, 2004
- Flexible camera calibration by viewing a plane from unknown orientations. **ZHENGYOU ZHANG.** Proceedings of the Seventh IEEE International Conference on Computer Vision. IEEE, 1999, vol. 1, 666-673